# EUROPEAN PATENT APPLICATION

(11) **EP 4 741 987 A1**
(43) Date of publication of application: **13.05.2026**
(21) Application number: 24865723.1
(22) Date of filing: 26.08.2024
(51) Int. Cl.: G06F 1/16, C09J 7/00, B32B 7/12, B32B 37/12

(54) **ELECTRONIC DEVICE INCLUDING COVER**

(30) Priority: 15.09.2023 KR 20230123128; 05.12.2023 KR 20230174880
(71) Applicant: Samsung Electronics Co., Ltd., Suwon-si, Gyeonggi-do 16677 (KR)
(72) Inventor: BAE, Jaehyun, Suwon-si Gyeonggi-do 16677 (KR); SEO, Bobum, Suwon-si Gyeonggi-do 16677 (KR); LEE, Yonggeon, Suwon-si Gyeonggi-do 16677 (KR); LEE, Jinseok, Suwon-si Gyeonggi-do 16677 (KR); JUNG, Wooin, Suwon-si Gyeonggi-do 16677 (KR); CHOI, Hyunsuk, Suwon-si Gyeonggi-do 16677 (KR)
(74) Representative: Gulde & Partner
(86) International application number: PCT/KR2024/012730
(87) International publication number: WO 2025/058282

(57) **Abstract**

The present disclosure relates to an electronic device. The electronic device according to an embodiment of the present disclosure may include: a housing; a flexible display at least a portion of which is deformably disposed on the housing; and a cover coupled to the flexible display and including a flexible portion configured to be deformable, wherein the cover includes: a first glass layer; a second glass layer spaced apart from the first glass layer and including a first portion and a second portion spaced apart from each other so that at least a portion of the flexible portion is positioned; an adhesive layer disposed between the first glass layer and the second glass layer and having a first hardness; and a filling layer disposed between the first portion and the second portion and having a second hardness smaller than the first hardness.

## Description

### [Technical Field]

Various embodiments of the disclosure relate to an electronic device, e.g., an electronic device including a cover.

### [Background Art]

With the remarkable advancement of information and communication technology and semiconductor technology, the distribution and use of various electronic devices are rapidly increasing. In particular, recent electronic devices are being developed to be portable and capable of communication.

An electronic device may refer to a device that performs a specific function according to a mounted program, such as home appliances, electronic organizers, portable multimedia players, mobile communication terminals, tablet PCs, video/audio devices, desktop/laptop computers, or vehicle navigation systems. For example, such electronic devices may output stored information as sound or video. As the integration density of electronic devices increases and ultra-high-speed, high-capacity wireless communication becomes common, recently, various functions may be mounted on a single electronic device such as a mobile communication terminal. For example, not only a communication function but also an entertainment function such as a game, a multimedia function such as music/video playback, a communication and security function such as mobile banking, and a schedule management or electronic wallet function are being integrated into a single electronic device. These electronic devices have been downsized to be conveniently carried by users.

The above-described information may be provided as related art for the purpose of helping understanding of the disclosure. No assertion or determination is made as to whether any of the above-described content may be applied as prior art in relation to the disclosure.

### [Detailed Description of the Invention]

### [Technical Problem]

An electronic device according to an embodiment of the disclosure may include a housing, a flexible display disposed on the housing such that at least a portion thereof is deformable, and a cover coupled to the flexible display and configured such that at least a portion thereof is deformable. The cover may include an inner glass layer extending in a first direction along a surface of the flexible display, a first outer glass layer spaced apart from the inner glass layer in a second direction intersecting the first direction, a second outer glass layer spaced apart from the inner glass layer in the second direction and spaced apart from the first outer glass layer in the first direction, a first adhesive layer disposed between the first outer glass layer and the inner glass layer, a second adhesive layer disposed between the second outer glass layer and the inner glass layer, and a filling layer at least a portion of which is disposed between the first adhesive layer and the second adhesive layer. The hardness of the first adhesive layer may be greater than the hardness of the filling layer.

An electronic device according to an embodiment of the disclosure may include a housing, a flexible display disposed on the housing such that at least a portion thereof is deformable, and a cover coupled to the flexible display and configured such that at least a portion thereof is deformable. The cover may include an inner glass layer extending in a first direction along a surface of the flexible display, a first outer glass layer spaced apart from the inner glass layer in a second direction intersecting the first direction, a second outer glass layer spaced apart from the inner glass layer in the second direction and spaced apart from the first outer glass layer in the first direction, a first adhesive layer disposed between the first outer glass layer and the inner glass layer, a second adhesive layer disposed between the second outer glass layer and the inner glass layer, a filling layer at least a portion of which is disposed between the first adhesive layer and the second adhesive layer, and an adhesive film layer extending in the first direction at a position spaced apart from the inner glass layer and laminated on the first outer glass layer, the second outer glass layer, and the filling layer.

An electronic device according to an embodiment of the disclosure may include a housing, a flexible display disposed on the housing such that at least a portion thereof is deformable, and a cover coupled to the flexible display and including a flexible portion configured to be deformable. The cover may include a first glass layer, a second glass layer spaced apart from the first glass layer and including a first portion and a second portion spaced apart from each other such that at least a portion of the flexible portion is positioned therebetween, an adhesive layer disposed between the first glass layer and the second glass layer and having a first hardness, and a filling layer disposed between the first portion and the second portion and having a second hardness which is smaller than the first hardness.

An electronic device according to an embodiment of the disclosure may include a deformable housing, a flexible display at least a portion of which is deformably received in the housing, and a cover disposed over the flexible display. The cover may include a first glass layer having a first thickness, a second glass layer having a second thickness greater than the first thickness and disposed over or under the first glass layer so as not to overlap a first area of the first glass layer but to overlap a second area of the first glass layer, a first adhesive layer disposed between the first glass layer and the second glass layer and having a first hardness, a filling layer disposed over or under the first glass layer so as to overlap the first area of the first glass layer substantially adjacent to a side surface of the second glass layer and having a second hardness smaller than the first hardness, a protective layer disposed over the first glass layer, the second glass layer, and the filling layer, and an adhesive film layer attaching the protective layer to the first glass layer or the second glass layer.

An electronic device according to an embodiment of the disclosure may include a housing, a flexible display disposed on the housing such that at least a portion thereof is deformable, and a cover coupled to the flexible display and including a flexible portion configured to be deformable. The cover may include an adhesive film layer spaced apart from the flexible display, a first glass layer disposed between the flexible display and the adhesive film layer, a second glass layer disposed between the flexible display and the adhesive film layer and spaced apart from the first glass layer, an adhesive layer disposed between the first glass layer and the second glass layer, and a filling layer disposed at a position corresponding to the flexible portion and between the flexible display and the adhesive film layer.

An electronic device according to an embodiment of the disclosure may include a housing, a flexible display disposed on the housing such that at least a portion thereof is deformable, and a cover coupled to the flexible display and including a flexible portion configured to be deformable and a cover portion connected to the flexible portion. The cover may include a first glass layer, a second glass layer spaced apart from the first glass layer and disposed at a first position corresponding to the cover portion, an adhesive layer disposed between the first glass layer and the second glass layer and having a first hardness, and a filling layer disposed at a second position corresponding to the flexible portion and having a second hardness smaller than the first hardness.

### [Brief Description of Drawings]

The above-described aspects or other aspects, configurations and/or advantages of an embodiment of the disclosure may become clearer through the following detailed description with reference to the accompanying drawings.
FIG. 1 is a block diagram illustrating an electronic device in a network environment according to various embodiments.
FIG. 2 is a view illustrating an unfolded state of an electronic device according to an embodiment of the disclosure.
FIG. 3 is a view illustrating a folded state of an electronic device according to an embodiment of the disclosure.
FIG. 4 is an exploded perspective view illustrating an electronic device according to an embodiment of the disclosure.
FIG. 5 is a portion of a cross-sectional view illustrating a cover and a display according to an embodiment of the disclosure.
FIG. 6A is a view conceptually illustrating a portion of a cross-sectional view illustrating an electronic device according to an embodiment of the disclosure.
FIG. 6B is a portion of a cross-sectional view illustrating an electronic device according to an embodiment of the disclosure.
FIG. 6C is an enlarged view illustrating an area M illustrated in FIG. 6B.
FIG. 7 is a portion of a cross-sectional view illustrating a display and a cover taken along reference line A-A' illustrated in FIG. 4.
FIG. 8 is a portion of a cross-sectional view illustrating a display and a cover taken along reference line B-B' illustrated in FIG. 4.
FIG. 9A is a portion of a second glass layer according to an embodiment of the disclosure.
FIG. 9B is a portion of a second glass layer according to an embodiment of the disclosure.
FIG. 9C is a portion of a second glass layer according to an embodiment of the disclosure.
FIG. 9D is a portion of a second glass layer according to an embodiment of the disclosure.
FIG. 9E is a portion of a second glass layer according to an embodiment of the disclosure.
FIG. 10 is a view illustrating a manufacturing process of a cover according to an embodiment of the disclosure.
FIG. 11A is an exploded view illustrating a cover according to an embodiment of the disclosure.
FIG. 11B is a view conceptually illustrating a cover according to an embodiment of the disclosure.
FIG. 12A is a portion of a cross-sectional view illustrating a cover and a display according to an embodiment of the disclosure.
FIG. 12B is a portion of a cross-sectional view illustrating a cover and a display according to an embodiment of the disclosure.
FIG. 12C is a portion of a cross-sectional view illustrating a cover and a display according to an embodiment of the disclosure.
FIG. 12D is a portion of a cross-sectional view illustrating a cover and a display according to an embodiment of the disclosure.
FIG. 12E is a portion of a cross-sectional view illustrating a cover and a display according to an embodiment of the disclosure.
FIG. 12F is a portion of a cross-sectional view illustrating a cover and a display according to an embodiment of the disclosure.
FIG. 12G is a portion of a cross-sectional view illustrating a cover and a display according to an embodiment of the disclosure.
FIG. 12H is a portion of a cross-sectional view illustrating a cover and a display according to an embodiment of the disclosure.
FIG. 12I is a portion of a cross-sectional view illustrating a cover and a display according to an embodiment of the disclosure.
FIG. 13 is a perspective view illustrating an electronic device according to an embodiment of the disclosure.
FIG. 14 is a cross-sectional view illustrating an electronic device according to an embodiment of the disclosure.
FIG. 15 is a view illustrating an electronic device according to an embodiment of the disclosure.
FIG. 16 is a conceptual view illustrating a portion of an electronic device according to an embodiment of the disclosure.
FIG. 17 is an exploded view illustrating a portion of an electronic device according to an embodiment of the disclosure.
FIG. 18 is a perspective view illustrating a supporting member according to an embodiment of the disclosure.
FIG. 19A is a view illustrating a cross-sectional view taken along reference line D-D' illustrated in FIG. 15 according to an embodiment.
FIG. 19B is a view illustrating a cross-sectional view taken along reference line D-D' illustrated in FIG. 15 according to an embodiment.
FIG. 19C is a view illustrating a cross-sectional view taken along reference line D-D' illustrated in FIG. 15 according to an embodiment.
FIG. 19D is a view illustrating a cross-sectional view taken along reference line D-D' illustrated in FIG. 15 according to an embodiment.
FIG. 19E is a view illustrating a cross-sectional view taken along reference line D-D' illustrated in FIG. 15 according to an embodiment.
FIG. 19F is a view illustrating a cross-sectional view taken along reference line D-D' illustrated in FIG. 15 according to an embodiment.
FIG. 20 is a portion of an electronic device according to an embodiment of the disclosure.
FIG. 21A is a portion of a cross-sectional view illustrating a cover and a display of the electronic device illustrated in FIG. 20.
FIG. 21B is a portion of a cross-sectional view illustrating a cover and a display of the electronic device illustrated in FIG. 20.
FIG. 21C is a portion of a cross-sectional view illustrating a cover and a display of the electronic device illustrated in FIG. 20.

Throughout the accompanying drawings, similar reference numerals may be given to similar portions, configurations and/or structures.

### [Mode for Carrying out the Invention]

The following description of the accompanying drawings may provide an understanding of various exemplary implementations of the disclosure including the claims and their corresponding contents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and conciseness.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

It should be understood that the singular forms "a", "an", and "the" include plural meanings unless the context clearly indicates otherwise. Thus, as an example, "a component surface" may be interpreted as including one or more of the surfaces of a component.

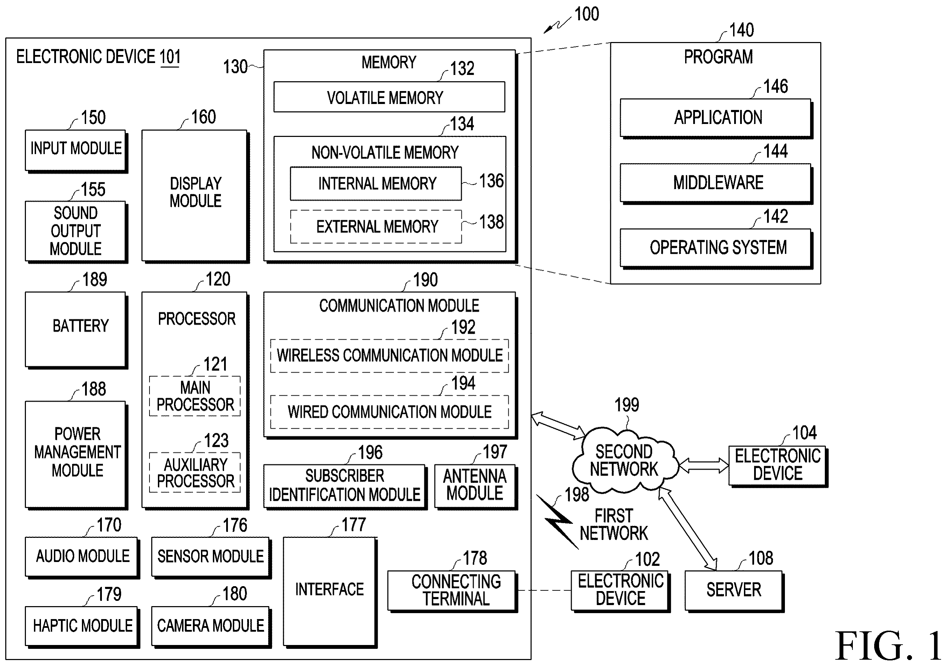

FIG. 1 is a block diagram illustrating an electronic device 101 in a network environment 100, according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

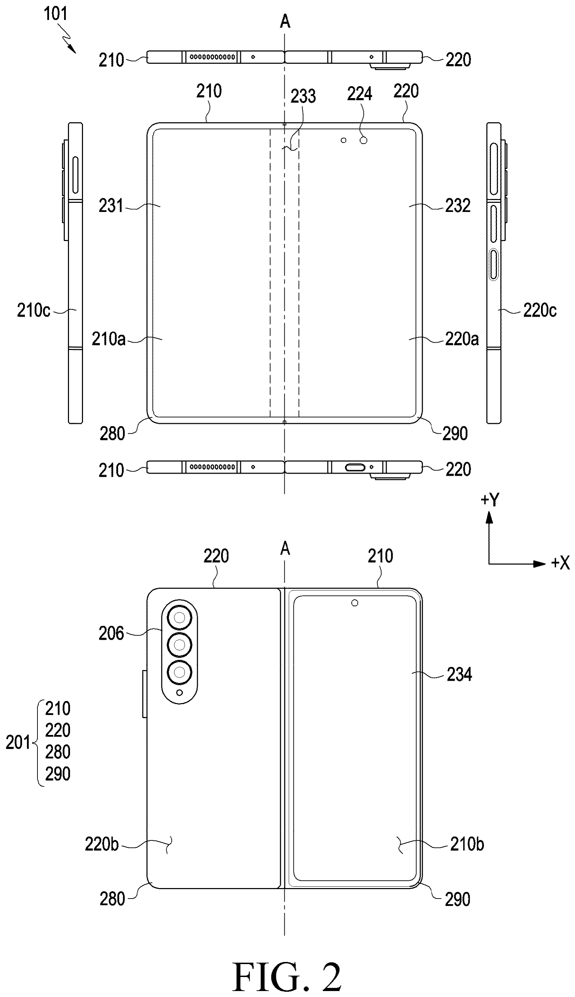

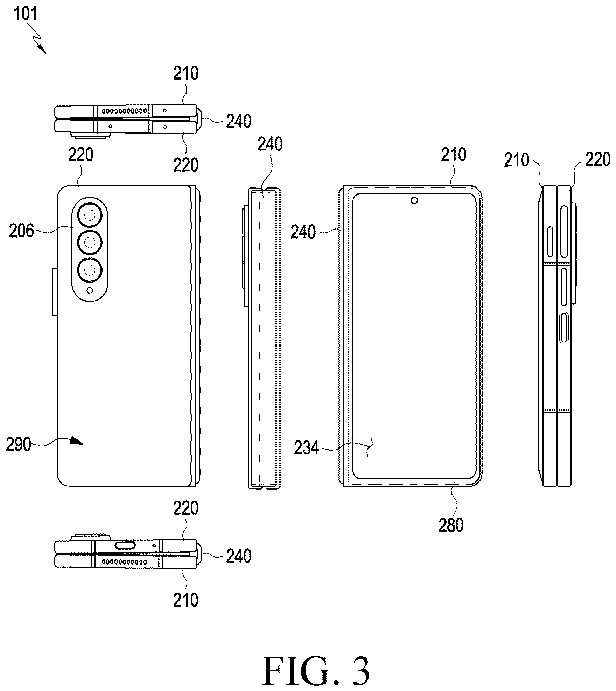

FIG. 2 is a view illustrating an unfolded state of an electronic device according to an embodiment of the disclosure. FIG. 3 is a view illustrating a folded state of an electronic device according to an embodiment of the disclosure.

Referring to FIGS. 2 and 3, an electronic device 101 may include a housing 201, a hinge cover 240 covering a foldable portion of the housing 201, and a display 230 disposed in a space formed by the housing 201. According to an embodiment, the surface where the screen output from the display 230 is exposed is defined as a front surface (e.g., the first front surface 210a and the second front surface 220a) of the electronic device 101. A surface opposite to the front surface is defined as a rear surface (e.g., the first rear surface 210b and the second rear surface 220b) of the electronic device 101. Further, a surface surrounding the space between the front surface and the rear surface is defined as a side surface (e.g., the first side surface 210c and the second side surface 220c) of the electronic device 101. The side surface of the electronic device 101 may be a side surface of at least one of the first housing 210 or the second housing 220. The electronic device 101 of FIGS. 2 and 3 may be referred to as a foldable electronic device, a portable electronic device, or a portable foldable electronic device. According to an embodiment, the housing 201 may be referred to as a foldable housing. The display 230 may be referred to as a "flexible display."

According to an embodiment, the housing 201 may include a first housing 210, a second housing 220 rotatable with respect to the first housing 210, a first rear cover 280, and a second rear cover 290. The housing 201 of the electronic device 101 are not limited to the shape and coupling shown in FIGS. 2 and 3 but may rather be implemented in other shapes or via a combination and/or coupling of other components. For example, in an embodiment, the first housing 210 and the first rear cover 280 may be integrally formed with each other, and the second housing 220 and the second rear cover 290 may be integrally formed with each other.

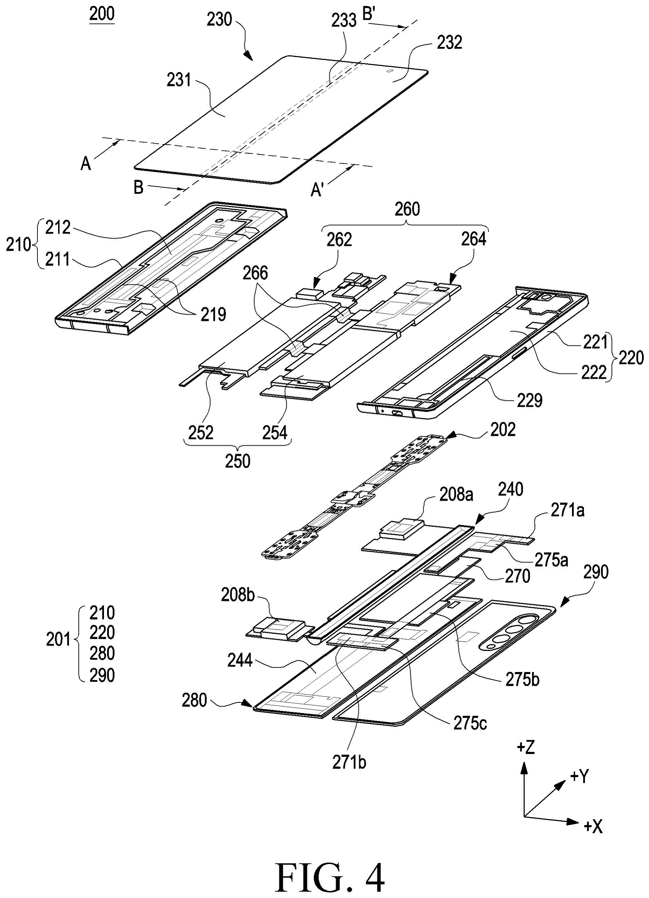

According to an embodiment, the first housing 210 may be connected to a hinge structure (e.g., the hinge assembly 202 of FIG. 4) and may include a first front surface 210a facing in a first direction and a first rear surface 210b facing in a second direction opposite to the first direction. The second housing 220 may be connected to the hinge assembly 202 and may include a second front surface 220a facing in a third direction and a second rear surface 220b facing in a fourth direction opposite to the third direction, and may rotate from the first housing 210 about the hinge assembly 202. Accordingly, the electronic device 101 may be changed to a folded state or an unfolded state. In the folded state of the electronic device 101, the first front surface 210a may face the second front surface 220a and, in the unfolded state, the third direction may be identical to the first direction. Hereinafter, unless otherwise mentioned, directions are described based on the unfolded state of the electronic device 101.

According to an embodiment, the first housing 210 and the second housing 220 are disposed on both sides of the folding axis A and are overall symmetrical in shape with respect to the folding axis A. As set forth below, the first housing 210 and the second housing 220 may have different angles or distances formed therebetween depending on whether the electronic device 101 is in the unfolded, folded, or intermediate state. According to an embodiment, the second housing 220 further includes the sensor area 224 where sensors (e.g., front camera) are disposed but, in the remaining area, the second housing 720 may be symmetrical in shape with the first housing 710.

According to an embodiment, there may be provided a plurality of (e.g., two) folding axes A parallel to each other. In the disclosure, the folding axis A is provided along the length direction (Y-axis direction) of the electronic device 101, but the direction of the folding axis A is not limited thereto. For example (not shown), the electronic device 101 may include the folding axis A extending along the width direction (e.g., X-axis direction).

According to an embodiment, the electronic device 101 may include a structure to which a digital pen may be attached. For example, the electronic device 101 may include a magnetic substance configured to attach the digital pen to a side surface of the first housing 210 or a side surface of the second housing 220. According to an embodiment, the electronic device 101 may include a structure into which a digital pen may be inserted. For example, a hole (not shown) into which the digital pen may be inserted may be formed in a side surface of the first housing 210 or a side surface of the second housing 220 of the electronic device 101.

According to an embodiment, the first housing 210 and the second housing 220 may at least partially be formed of a metal or non-metallic material with a rigidity selected to support the display 230. At least a portion formed of metal may provide a ground plane of the electronic device 101 and may be electrically connected with a ground line formed on a printed circuit board (e.g., the board unit 260 of FIG. 4).

According to an embodiments, the sensor area 224 may be formed adjacent to an edge or corner of the second housing 220 and to have a predetermined area. However, the placement, shape, or size of the sensor area 224 is not limited to those illustrated. According to an embodiment, the sensor area 224 may be provided in a different corner of the second housing 220 or in any area between the top corner and the bottom corner or in the first housing 210. In an embodiment, components for performing various functions, embedded in the electronic device 101, may be exposed through the sensor area 224 or one or more openings in the sensor area 224 to the front surface of the electronic device 101. In various embodiments, the components may include various kinds of sensors. The sensor may include, e.g., at least one of a front camera, a receiver, or a proximity sensor.

According to an embodiment, the first rear cover 280 may be disposed on one side of the folding axis A on the rear surface of the electronic device 101 and have, e.g., a substantially rectangular periphery which may be surrounded by the first housing 210. Similarly, the second rear cover 290 may be disposed on the opposite side of the folding axis A on the rear surface of the electronic device 101 and its periphery may be surrounded by the second housing 220.

According to an embodiment, the first rear cover 280 and the second rear cover 290 may be substantially symmetrical in shape with respect to the folding axis (axis A). However, the first rear cover 280 and the second rear cover 290 are not necessarily symmetrical in shape. According to an embodiment, the electronic device 101 may include the first rear cover 280 and the second rear cover 290 in various shapes.

According to an embodiment, the first rear cover 280, the second rear cover 290, the first housing 210, and the second housing 220 may form a space where various components (e.g., a printed circuit board or battery) of the electronic device 101 may be disposed. According to an embodiment, one or more components may be arranged or visually exposed on/through the rear surface of the electronic device 101. For example, at least a portion of a sub display (e.g., the sub display 244 of FIG. 4) may be visually exposed through at least a portion of the first rear cover 280. According to an embodiment, one or more components or sensors may be visually exposed through at least a portion of the first rear cover 290. According to various embodiments, the sensor may include a proximity sensor and/or a camera module 206 (e.g., rear camera).

According to an embodiment, a front camera exposed to the front surface of the electronic device 101 through one or more openings provided in the sensor area 224 or the camera module 206 exposed through at least a portion of the second rear cover 290 may include one or more lenses, an image sensor, and/or an image signal processor. In an embodiment, two or more lenses (an infrared (IR) camera, a wide-angle lens, and a telephoto lens) and image sensors may be disposed on one surface of the electronic device 101.

According to an embodiment, the hinge cover 240 may be disposed between the first housing 210 and the second housing 220 to hide the internal components (e.g., the hinge assembly 202 of FIG. 4). According to an embodiment, the hinge cover 240 may be hidden by a portion of the first housing 210 and second housing 220 or be exposed to the outside depending on the state (e.g., the unfolded state (e.g., flat state) or folded state) of the electronic device 101.

According to an embodiment, as shown in FIG. 2, in the unfolded state of the electronic device 101, the hinge cover 240 may be hidden, and thus not exposed, by the first housing 210 and the second housing 220. As another example, as shown in FIG. 3, in the folded state (e.g., a fully folded state) of the electronic device 101, the hinge cover 240 may be exposed to the outside between the first housing 210 and the second housing 220. As another example, when the first housing 210 and the second housing 220 are in an intermediate state folded with a predetermined angle, the hinge cover 240 may be partially exposed to the outside between the first housing 210 and the second housing 220. However, in this case, the exposed area may be smaller than that in the completely folded state. In an embodiment, the hinge cover 240 may include a curved surface.

According to an embodiment, the display 230 may be disposed in a space formed by the housing 201. For example, the display 230 may be seated on a recess formed by the housing 201 and may occupy most of the front surface of the electronic device 101. Thus, the front surface of the electronic device 101 may include the display 230 and a partial area of the first housing 210 and a partial area of the second housing 220, which are adjacent to the display 230. The rear surface of the electronic device 101 may include a first rear cover 280, a partial area of the first housing 210 adjacent to the first rear cover 280, a second rear cover 290, and a partial area of the second housing 220 adjacent to the second rear cover 290.

According to an embodiment, the display 230 may include a plurality of displays spaced apart from each other. For example, the display 230 may include a first display area 231 disposed on the first housing 210 and a second display area 232 disposed on the second housing 220. According to an embodiment, the first display area 231 and the second display area 232 may rotate about the folding axis A.

According to an embodiment, the display 230 may mean a display at least a portion of which may be transformed into a flat or curved surface. For example, the display 230 may be a foldable or flexible display. According to an embodiment, the display 230 may include a folding area 233, a first display area 231 disposed on one side of the folding area 233 (e.g., the left side of the folding area 233 of FIG. 2), and a second display area 232 disposed on the opposite side of the folding area 233 (e.g., the right side of the folding area 203 of FIG. 2). However, the segmentation of the display 230 is merely an example, and the display 230 may be divided into a plurality of (e.g., four or more, or two) areas depending on the structure or function of the display 200. For example, in the embodiment illustrated in FIG. 2, the display 230 may be divided into the areas by the folding area 233 or folding axis (axis A) extending in parallel with the Y axis but, according to an embodiment, the display 230 may be divided into the areas with respect to another folding area (e.g., a folding area parallel with the X axis) or another folding axis (e.g., a folding axis parallel with the X axis). According to an embodiment, the display 230 may be coupled with or disposed adjacent to a touch detection circuit, a pressure sensor capable of measuring the strength (pressure) of touches, and/or a digitizer (not shown) for detecting a magnetic field-type stylus pen.

According to an embodiment, the first display area 231 and the second display area 232 may be overall symmetrical in shape with respect to the folding area 233. According to an embodiment (not shown), unlike the first display area 231, the second display area 232 may include a notch depending on the presence of the sensor area 224, but the rest may be symmetrical in shape with the first display area 231. For example, the first display area 231 and the second display area 232 may include symmetrical portions and asymmetrical portions.

Described below are the operation of the first housing 210 and the second housing 220 and each area of the display 230 depending on the state (e.g., the unfolded state (or flat state) and folded state) of the electronic device 101.

According to an embodiment, when the electronic device 101 is in the unfolded state (flat state) (e.g., FIG. 2), the first housing 210 and the second housing 220 may be disposed to face in the same direction while being angled substantially at 180 degrees therebetween. The surface of the first display area 231 and the surface of the second display area 232 of the display 230 may be angled at 180 degrees therebetween while facing in the same direction (e.g., forward of the front surface of the electronic device). The folding area 233 may form the same plane with the first display area 231 and the second display area 232.

According to an embodiment, when the electronic device 101 is in the folded state (e.g., FIG. 3), the first housing 210 and the second housing 220 may be disposed to face each other. The surface of the first display area 231 and the surface of the second display area 232 of the display 230 may be angled at a small angle (e.g., an angle between 0 degrees and 10 degrees) therefrom while facing each other. At least a portion of the folding area 233 may be formed as a curve having a predetermined curvature.

According to an embodiment, when the electronic device 101 is in the intermediate state (not shown), the first housing 210 and the second housing 220 may be disposed at a certain angle therebetween. The surface of the first display area 231 of the display 230 and the surface of the second display area 232 may form an angle which is larger than the angle in the folded state and smaller than the angle in the unfolded state. The folding area 233 may at least partially have a curved surface with a predetermined curvature and, in this case, the curvature may be smaller than that when it is in the folded state.

FIG. 4 is an exploded perspective view illustrating an electronic device according to an embodiment of the disclosure.

Referring to FIG. 4, an electronic device 101 may include a housing 201, a display 230, a hinge assembly 202, a battery 250, and a board unit 260. The housing 201 may include a first housing 210, a second housing 220, a first rear cover 280, and a second rear cover 290. The configuration of the first housing 210, the second housing 220, the hinge cover 240, the first rear cover 280, and the second rear cover 290 of FIG. 4 may be identical in whole or part to the configuration of the first housing 210, the second housing 220, the hinge cover 240, the first rear cover 280, and the second rear cover 290 of FIG. 2 and/or FIG. 3.

According to an embodiment, the first housing 210 and the second housing 220 may be assembled together to be coupled to two opposite sides of the hinge assembly 202. According to an embodiment, the first housing 210 may include a first supporting area 212 that may support the components (e.g., the first circuit board 262 and/or the first battery 252) of the electronic device 101 and a first sidewall 211 surrounding at least a portion of the first supporting area 212. The first sidewall 211 may include a first side surface (e.g., the first side surface 210c of FIG. 2) of the electronic device 101. According to an embodiment, the second housing 220 may include a second supporting area 222 that may support the components (e.g., the second circuit board 264 and/or the second battery 254) of the electronic device 101 and a second sidewall 221 surrounding at least a portion of the second supporting area 222. The second sidewall 221 may include a second side surface (e.g., the second side surface 220c of FIG. 2) of the electronic device 101.

According to an embodiment, the display 230 (e.g., first display) may include a first display area 231, a second display area 232, a folding area 233, and a sub display 244 (e.g., second display). The configuration of the first display area 231, the second display area 232, and the folding area 233 of FIG. 3 may be identical in whole or part to the configuration of the first display area 231, the second display area 232, and the folding area 233 of FIG. 1 and/or FIG. 2.

According to an embodiment, the sub display 244 may display screen in a different direction from the display areas 231 and 232. For example, the sub display 244 may output screen in a direction opposite to the first display area 231. According to an embodiment, the sub display 244 may be disposed on the first rear cover 280.

According to an embodiment, the battery 250 may include a first battery 252 disposed within the first housing 210 and a second battery 254 disposed within the second housing 220. According to an embodiment, the first battery 252 may be connected with the first circuit board 262, and the second battery 254 may be connected to the second circuit board 264. According to an embodiment, the battery 250 may supply power to at least one component of the electronic device 101. According to an embodiment, the battery 250 may include, e.g., a non-rechargeable primary battery, a rechargeable secondary battery, or a fuel cell.

According to an embodiment, the board unit 260 may include a first circuit board 262 disposed in the first housing 210 and a second circuit board 264 disposed in the second housing 220. According to an embodiment, the first circuit board 262 and the second circuit board 264 may be electrically connected by at least one flexible circuit board 266. According to an embodiment, at least a portion of the flexible circuit board 266 may be disposed across the hinge assembly 202. According to an embodiment, the first circuit board 262 and the second circuit board 264 may be disposed in a space formed by the first housing 210, the second housing 220, the first rear cover 280, and the second rear cover 290. Components for implementing various functions of the electronic device 101 may be disposed on the first circuit board 262 and the second circuit board 264.

According to an embodiment, the hinge assembly 202 may include a hinge 2021. The hinge 2021 may rotatably couple the first housing 210 and the second housing 220. A plurality of hinges 2021 may be disposed to be spaced apart from each other in the length direction of the hinge assembly 202. The hinge assembly 202 may include a supporting plate 2022. The supporting plate 2022 may support at least a portion of the display 230. A plurality of supporting plates 2022 may be disposed to be spaced apart from each other in the length direction of the hinge assembly 202.

According to an embodiment, the electronic device 101 may include speakers 208a and 208b. According to an embodiment, the speakers 208a and 2008b may convert the electric signal into sound. According to an embodiment, the speakers 208a and 208b may be disposed in a space formed by the first housing 210, the second housing 220, the first rear cover 280, and the second rear cover 290. According to an embodiment, the speakers 208a and 208b may include an upper speaker 208a positioned in an upper portion (+Y direction) of the electronic device 101 and a lower speaker 208b positioned in a lower portion (-Y direction) of the electronic device 101. In the disclosure, the speakers 208a and 208b are illustrated as positioned in one housing (e.g., the first housing 210 of FIG. 4), but this is an optional structure. For example, the speakers 208a and 208b may be positioned in at least one of the first housing 210 or the second housing 220. The configuration of the speakers 208a and 208b of FIG. 4 may be identical in whole or part to the configuration of the sound output module 155 of FIG. 1.

According to an embodiment, the electronic device 101 may include a rear member 270 (or rear case). According to an embodiment, the rear member 270 may be disposed in the housing 201 (e.g., the second housing 220). According to an embodiment, the rear member 270 may accommodate at least one antenna 275.

According to an embodiment, the electronic device 101 may include an antenna 275. The antennas 275a and 275b may include, e.g., an ultra-wide band (UWB) antenna 275a, a near-field communication (NFC) antenna, a wireless charging antenna, and/or a magnetic secure transmission (MST) antenna 275b. The antenna 275 may perform short-range communication with, e.g., an external device or may wirelessly transmit or receive power necessary for charging.

According to an embodiment, an antenna structure may be formed by a portion of the housing 201 or a combination thereof. For example, the antenna 275 may include a communication antenna 275c at least a portion of which is exposed to the outside and which forms at least a portion of the exterior of the electronic device 101. The communication antenna 275c may be used for communication (e.g., Wi-Fi) with an external electronic device. The communication antenna 275c may be connected to the upper portion 271a or the lower portion 271b of the rear member 270.

In the following detailed description, a configuration in which a pair of housings (or referred to as a 'housing') are coupled to be rotatable by a hinge structure is described as an example. However, it should be noted that the electronic device according to various embodiments of the disclosure is not limited thereto. For example, according to various embodiments, the electronic device may include three or more housings. In the embodiment disclosed below, a "pair of housings" may mean two rotatably-coupled housings among three or more housings.

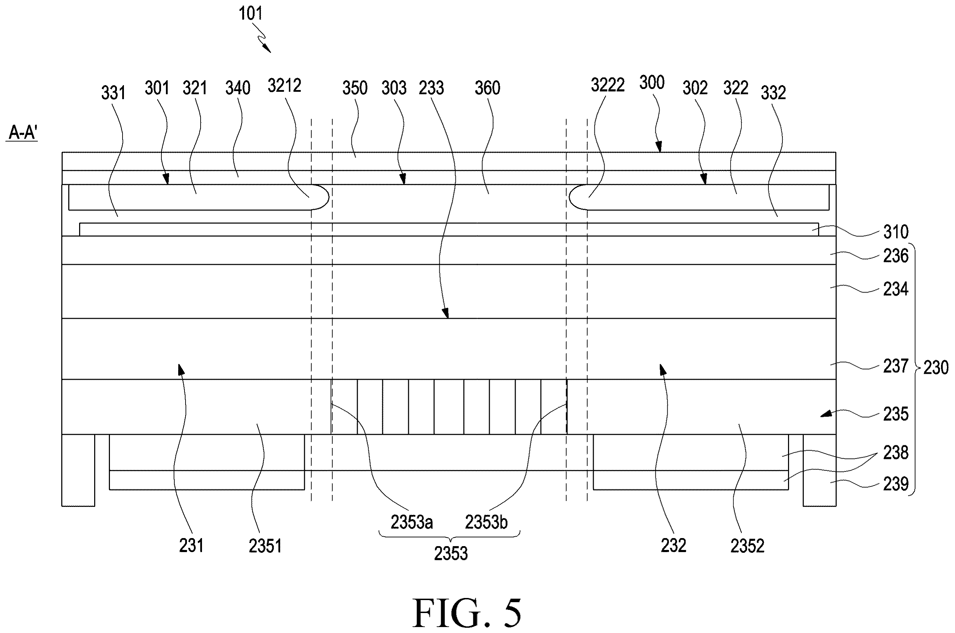

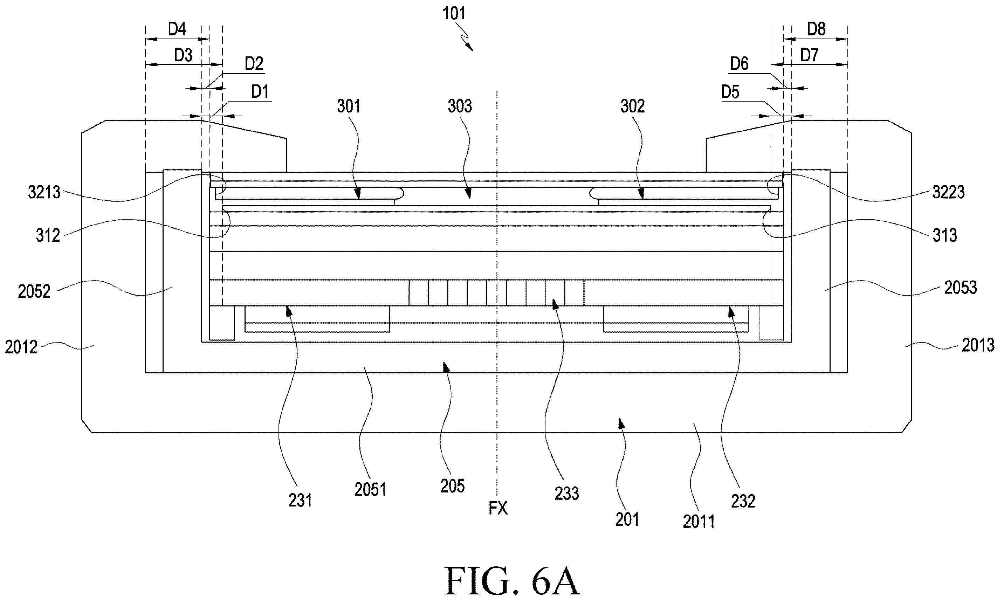

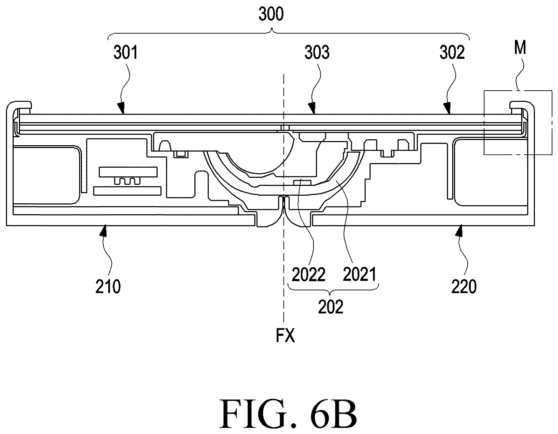

FIG. 5 is a cross-sectional view illustrating the display 230 taken along reference line A-A' illustrated in FIG. 4. FIG. 6A is a cross-sectional view illustrating the display 230, the housing 201 receiving the display 230, and the supporting member 205 illustrated in FIG. 5. The components described with reference to FIGS. 5 and 6A may be identical in whole or part to the components described with reference to FIGS. 1 to 4. The components described with reference to FIGS. 5 and 6A may be identical in whole or part to the components described with reference to FIGS. 6B to 21C.

According to an embodiment, the electronic device 101 may include a display 230 and a cover 300 disposed on one side of the display 230. The cover 300 may be referred to as a "front plate" or a "window." The cover 300 may be coupled to the display 230. The cover 300 may form a front surface (e.g., the front surfaces 210a and 220a of FIG. 2) of the electronic device 101.

According to an embodiment, the display 230 may include a plurality of layers. The plurality of layers of the display 230 may be laminated on one another. The display 230 may include a panel layer 234. The panel layer 234 may be configured to display a screen. The panel layer 234 may output a screen toward the cover 300. The display 230 may include a reinforcement layer 235. The reinforcement layer 235 may include a lattice pattern. The reinforcement layer 235 may include a metal material having a lattice pattern. The panel layer 234 may be disposed between the cover 300 and the reinforcement layer 235. The display 230 may include a support layer 238. The support layer 238 may be coupled to the reinforcement layer 235. The support layer 238 may be disposed between the reinforcement layer 235 and the supporting member 205. The display 230 may include a shielding member 239. The shielding member 239 may be disposed on two opposite side surfaces of the display 230. The shielding member 239 may reduce penetration of foreign objects into an interior of the display 230. The display 230 may include a first cushion layer 236 and a second cushion layer 237. The first cushion layer 236 and the second cushion layer 237 may include an adhesive material. The first cushion layer 236 may connect the panel layer 234 and the cover 300. The second cushion layer 237 may connect the panel layer 234 and the reinforcement layer 235.

According to an embodiment, the display 230 may include a first display area 231, a second display area 232, and a folding area 233. The description of the first display area 231, the second display area 232, and the folding area 233 may be equally applied to the areas (e.g., the first display area 231, the second display area 232, and the folding area 233) described with reference to FIGS. 1 to 4.

According to an embodiment, the display 230 may be folded or unfolded based on the folding area 233. The first display area 231 and the second display area 232 may be rotated based on the folding area 233.

According to an embodiment, the reinforcement layer 235 may include a first reinforcement area 2351, a second reinforcement area 2352, and a third reinforcement area 2353. The first reinforcement area 2351 may be disposed within the first display area 231. The second reinforcement area 2352 may be disposed within the second display area 232. The third reinforcement area 2353 may be disposed within the folding area 233. The third reinforcement area 2353 may include a lattice pattern. The third reinforcement area 2353 may include a first reinforcement boundary portion 2353a and a second reinforcement boundary portion 2353b. The lattice pattern may be formed between the first reinforcement boundary portion 2353a and the second reinforcement boundary portion 2353b. The first reinforcement boundary portion 2353a and the second reinforcement boundary portion 2353b may be disposed within the folding area 233.

According to an embodiment, the cover 300 may include a first cover area 301, a second cover area 302, and a cover folding area 303. Each of the first cover area 301, the second cover area 302, and the cover folding area 303 may be a portion of the cover 300. The first cover area 301 may correspond to the first display area 231. The first cover area 301 may be connected to the first display area 231. The second cover area 302 may correspond to the second display area 232. The second cover area 302 may be connected to the second display area 232. The cover folding area 303 may correspond to the folding area 233. The cover folding area 303 may be connected to the folding area 233. The cover folding area 303 may be referred to as a "deformable portion." The cover folding area 303 may be referred to as a "flexible portion."

According to an embodiment, the cover 300 may include an inner glass layer 310. The inner glass layer 310 may be connected to the display 230. The inner glass layer 310 may be coupled to the first cushion layer 236. The inner glass layer 310 may include a glass material. The material of the inner glass layer 310 is not limited to thereto. For example, the inner glass layer 310 may include a polycarbonate (PC) material. For example, the inner glass layer 310 may include a sapphire glass material. For example, the inner glass layer 310 may include a transparent material of high hardness. The thickness of the inner glass layer 310 may be in a range of 10 µm to 50 µm. The inner glass layer 310 may be referred to as a "first glass layer." The inner glass layer 310 may be referred to as a "first layer."

According to an embodiment, the cover 300 may include an outer glass layer 320. The cover 300 may include a first outer glass layer 321 and a second outer glass layer 322. The outer glass layer 320 may include the first outer glass layer 321 and the second outer glass layer 322. The first outer glass layer 321 may be spaced apart from the inner glass layer 310. The first outer glass layer 321 may correspond to the first display area 231. The first outer glass layer 321 may be disposed within the first cover area 301. The second outer glass layer 322 may be spaced apart from the inner glass layer 310. The second outer glass layer 322 may correspond to the second display area 232. The second outer glass layer 322 may be disposed within the second cover area 302. The first outer glass layer 321 and the second outer glass layer 322 may be spaced apart from each other, and the cover folding area 303 may be formed between the first outer glass layer 321 and the second outer glass layer 322. The first outer glass layer 321 may include a first edge 3212 facing the filling layer 360. The second outer glass layer 322 may include a second edge 3222 facing the filling layer 360. The thickness of the outer glass layers 321 and 322 may be in a range of 20 µm to 500 µm.

The outer glass layer 320 may be referred to as a "second glass layer." The outer glass layer 320 may be referred to as a "second layer." The first outer glass layer 321 may be referred to as a "first glass member." The second outer glass layer 322 may be referred to as a "second glass member." The first outer glass layer 321 may be referred to as a "first member" or a "first portion." The second outer glass layer 322 may be referred to as a "second member" or a "second portion." The outer glass layer 320 may include a glass material. The material of the outer glass layer 320 is not limited to thereto. For example, the outer glass layer 320 may include a polycarbonate (PC) material. For example, the outer glass layer 320 may include a sapphire glass material. For example, the outer glass layer 320 may include a transparent material of high hardness.

A cover (e.g., the covers 300, 400, 500, and 600 of FIGS. 1 to 21C) according to various embodiments of the disclosure may include a first glass layer (e.g., the first glass layer 310 of FIG. 5) and a second glass layer (e.g., the second glass layer 320 of FIG. 5). The thickness of the first glass layer 310 may be smaller than the thickness of the second glass layer 320. The first glass layer 310 may have greater deformation than the second glass layer 320 during the same operation (e.g., an operation in which the cover 300 is bent or straightened). For example, when the cover 300 and the flexible display 230 are bent, the first glass layer 310 may be bent to a greater extent than the second glass layer 320. The second glass layer 320 may have greater impact resistance than the first glass layer 310. The second glass layer 320 may have greater rigidity than the first glass layer 310. A cover (e.g., the covers 300, 400, 500, and 600 of FIGS. 1 to 21C) according to various embodiments of the disclosure may enhance deformation performance of the cover 300 by disposing the first glass layer 310 that is thinner than the second glass layer 320. A cover (e.g., the covers 300, 400, 500, and 600 of FIGS. 1 to 21C) according to various embodiments of the disclosure may enhance rigidity of the cover 300 by disposing the second glass layer 320 that is thicker than the first glass layer 310. A cover (e.g., the covers 300, 400, 500, and 600 of FIGS. 1 to 21C) according to various embodiments of the disclosure may enhance both deformation performance and rigidity of the cover 300 by disposing the filling layer 360 in a portion of the cover 300 where deformation is relatively large and disposing the second glass layer 320 in a portion of the cover 300 where deformation is relatively small.

According to an embodiment, the cover 300 may include a first adhesive layer 331 and a second adhesive layer 332. The first adhesive layer 331 may be disposed between the inner glass layer 310 and the first outer glass layer 321. The first adhesive layer 331 may connect the inner glass layer 310 and the first outer glass layer 321. The first adhesive layer 331 may be disposed within the first cover area 301. The first adhesive layer 331 may correspond to the first display area 231. The second adhesive layer 332 may be disposed between the inner glass layer 310 and the second outer glass layer 322. The second adhesive layer 332 may connect the inner glass layer 310 and the second outer glass layer 322. The second adhesive layer 332 may be disposed within the second cover area 302. The second adhesive layer 332 may correspond to the second display area 232. The adhesive layers 331 and 332 may include an optically clear adhesive film. The adhesive layers 331 and 332 may include a heat-reactive adhesive. The adhesive layers 331 and 332 may include a general adhesive. The adhesive layers 331 and 332 may include a double-sided tape. The thickness of the adhesive layers 331 and 332 may be in a range of 0.05 µm to 50 µm.

According to an embodiment, the cover 300 may include an adhesive film layer 340. The adhesive film layer 340 may be connected to the first outer glass layer 321 and the second outer glass layer 322. The adhesive film layer 340 may be spaced apart from the inner glass layer 310. The adhesive film layer 340 may include a pressure sensitive adhesive (PSA) material. The adhesive film layer 340 may be referred to as a "buffer layer." The adhesive film layer 340 may be referred to as a "third adhesive layer." The adhesive film layer 340 may be referred to as a "pressure-sensitive adhesive film." The adhesive film layer 340 may be referred to as a "film layer." The adhesive film layer 340 may be referred to as a "bonding layer." The adhesive film layer 340 may have a thickness in a range of 1 µm to 50 µm. The adhesive film layer 340 may be disposed between the second glass layer 320 and the protective layer 350 and may adhere the second glass layer 320 and the protective layer 350 to each other. The adhesive film layer 340 may be disposed between the filling layer 360 and the protective layer 350 and may adhere the filling layer 360 and the protective layer 350 to each other. The adhesive film layer 340 may have a higher hardness than the filling layer 360. The adhesive film layer 340 may have higher impact resistance than the filling layer 360.

According to an embodiment, the cover 300 may include a protective layer 350. The protective layer 350 may be connected to the adhesive film layer 340. The protective layer 350 may include a polymer material. The protective layer 350 may be referred to as a "polymer layer." The protective layer 350 may form an outermost surface of the cover 300. A cover according to an embodiment of the disclosure may include a second protective layer (not illustrated) disposed on one surface of the protective layer 350, and the second protective layer may form the outermost surface of the cover.

According to an embodiment, the cover 300 may include a filling layer 360. The filling layer 360 may be disposed within the cover folding area 303. The filling layer 360 may be disposed between the inner glass layer 310 and the adhesive film layer 340. The filling layer 360 may be disposed between the first outer glass layer 321 and the second outer glass layer 322. The filling layer 360 may be disposed between the first adhesive layer 331 and the second adhesive layer 332. The filling layer 360 may include a resin material. The filling layer 360 may include a material having viscosity. The filling layer 360 may be formed by hardening a material having viscosity.

According to an embodiment, physical properties of the adhesive layer 330, the adhesive film layer 340, and the filling layer 360 may be different from one another. For example, the viscosity of the adhesive layer 330 and the viscosity of the filling layer 360 may be different from each other. A first viscosity of the adhesive layer 330 may be smaller than a second viscosity of the filling layer 360. Because the first viscosity of the adhesive layer 330 is smaller than the second viscosity of the filling layer 360, the thickness of the adhesive layer 330 may be formed to be lower than that of the filling layer 360.

According to an embodiment, physical properties of the adhesive layer 330, the adhesive film layer 340, and the filling layer 360 may be substantially the same as one another. For example, the refractive indices of the adhesive layer 330, the adhesive film layer 340, and the filling layer 360 may be substantially the same as one another. The refractive index of each of the adhesive layer 330, the adhesive film layer 340, and the filling layer 360 may be the same as the refractive index of the glass layers 310 and 320.

According to an embodiment, physical properties of the adhesive layer 330, the adhesive film layer 340, and the filling layer 360 may be different from one another. For example, the hardness of the adhesive layer 330 and the hardness of the adhesive film layer 340 may be different from each other. For example, the hardness of the adhesive layer 330 and the hardness of the filling layer 360 may be different from each other. For example, the hardness of the adhesive film layer 340 and the hardness of the filling layer 360 may be different from each other. A first hardness of the adhesive layer 330 may be greater than a second hardness of the adhesive film layer 340. The second hardness of the adhesive film layer 340 may be greater than a third hardness of the filling layer 360. Due to the hardness difference between the above-described layers 330, 340, and 360, strength of a portion of the cover 300 having a relatively small degree of deformation may be enhanced, and a deformation rate of another portion of the cover 300 having a relatively large degree of deformation may be enhanced. The description of the hardness difference between the above-described layers 330, 340, and 360 may be equally applied to other physical properties (e.g., modulus and strength). For example, a first modulus of the adhesive layer 330 may be greater than a second modulus of the adhesive film layer 340, and the second modulus of the adhesive film layer 340 may be greater than a third modulus of the filling layer 360.

According to an embodiment, the electronic device 101 may include a housing 201 and a supporting member 205. A space may be formed inside the housing 201 and the supporting member 205, and the display 230 and the cover 300 may be disposed inside the space. The housing 201 and the supporting member 205 may be folded or unfolded based on a folding axis FX.

According to an embodiment, the housing 201 may include a base plate 2011. The supporting member 205 may be seated on the base plate 2011. The housing 201 may include a first housing wall 2012 and a second housing wall 2013. The first and second housing walls 2012 and 2013 may extend from the base plate 2011. The supporting member 205 may be disposed between the first housing wall 2012 and the second housing wall 2013.

According to an embodiment, the supporting member 205 may be disposed inside the housing 201. The supporting member 205 may be referred to as a "deco," a "finishing member," or a "display receiving member." The supporting member 205 may include a support plate 2051. The support plate 2051 may be seated on the base plate 2011. The supporting member 205 may include a first support wall 2052 and a second support wall 2053. The first support wall 2052 may face the first housing wall 2012. The second support wall 2053 may face the second housing wall 2013. The first and second support walls 2052 and 2053 may extend from the support plate 2051. The display 230 may be disposed between the first support wall 2052 and the second support wall 2053. The cover 300 may be disposed between the first support wall 2052 and the second support wall 2053.

According to an embodiment, the inner glass layer 310 may include a first inner glass edge 312 and a second inner glass edge 313. The first inner glass edge 312 may be disposed within the first cover area 301. The second inner glass edge 313 may be disposed within the second cover area 302. The first inner glass edge 312 may be spaced apart from the first support wall 2052. The second inner glass edge 313 may be spaced apart from the second support wall 2053.

According to an embodiment, the first outer glass layer 321 may include a first side portion 3213. The first side portion 3213 may be disposed within the first cover area 301. The first side portion 3213 may be spaced apart from the first support wall 2052. The second outer glass layer 322 may include a second side portion 3223. The second side portion 3223 may be disposed within the second cover area 302. The second side portion 3223 may be spaced apart from the second support wall 2053.

According to an embodiment, a gap D1 between the first inner glass edge 312 and the first support wall 2052 may be greater than a gap D2 between the first side portion 3213 and the first support wall 2052. The first side portion 3213 may be located closer to the first support wall 2052 than the first inner glass edge 312. A gap D3 between the first inner glass edge 312 and the first housing wall 2012 may be greater than a gap D4 between the first side portion 3213 and the first housing wall 2012. The first side portion 3213 may be located closer to the first housing wall 2012 than the first inner glass edge 312.

According to an embodiment, the side portions 3213 and 3223 of the second glass layer 320 may be located closer to a display side surface 2308 than the edges 312 and 313 of the first glass layer 310. For example, a first gap between the second side portion 3223 of the second glass layer 320 and the display side surface 2308 may be smaller than a second gap between the second inner glass edge 313 of the first glass layer 310 and the display side surface 2308. Due to the above-described structure, a risk of damage to the first glass layer 310 may be decreased when a predetermined operation (e.g., pressing or impact) is applied to the cover 300 and the display 230. For example, when a predetermined operation (e.g., pressing or impact) is applied to the cover 300 and the display 230, the second glass layer 320 covers the first glass layer 310 at an end portion of the cover 300, and thus the risk of damage to the first glass layer 310 may be decreased.

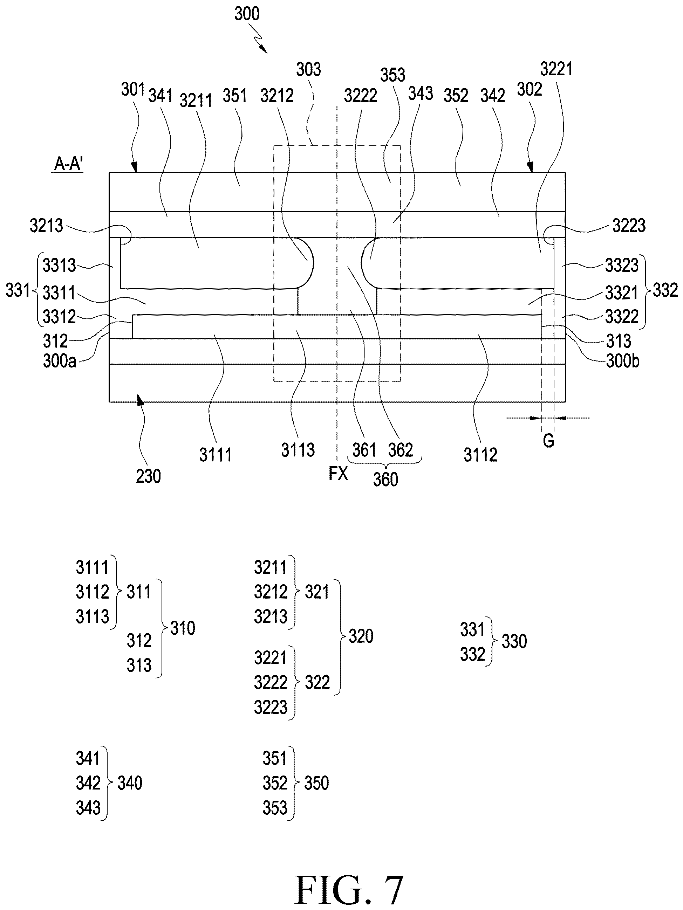

According to an embodiment, the side portions 3213 and 3223 of the second glass layer 320 may be located closer to side surfaces of the cover 300 (e.g., the side surfaces 300a and 300b of FIG. 7) than the edges 312 and 313 of the first glass layer 310. For example, a first gap between the first side portion 3213 of the second glass layer 320 and the first surface 300a may be smaller than a second gap between the first inner glass edge 312 of the first glass layer 310 and the first surface 300a. For example, a first gap between the second side portion 3223 of the second glass layer 320 and the second surface 300b may be smaller than a second gap between the second inner glass edge 313 of the first glass layer 310 and the second surface 300b. Due to the above-described structure, a risk of damage to the first glass layer 310 may be decreased when a predetermined operation (e.g., pressing or impact) is applied to the cover 300 and the display 230. For example, when a predetermined operation (e.g., pressing or impact) is applied to the cover 300 and the display 230, the second glass layer 320 covers the first glass layer 310 at an end portion of the cover 300, and thus the risk of damage to the first glass layer 310 may be decreased.

According to an embodiment, a gap D5 between the second inner glass edge 313 and the second support wall 2053 may be greater than a gap D6 between the second side portion 3223 and the second support wall 2053. The second side portion 3223 may be located closer to the second support wall 2053 than the second inner glass edge 313. A gap D7 between the second inner glass edge 313 and the second housing wall 2013 may be greater than a gap D8 between the second side portion 3223 and the second housing wall 2013. The second side portion 3223 may be located closer to the second housing wall 2013 than the second inner glass edge 313.

According to an embodiment, the reinforcement layer 235 may include a third reinforcement area 2353. The third reinforcement area 2353 may include a first reinforcement boundary portion 2353a and a second reinforcement boundary portion 2353b. The third reinforcement area 2353 may include a lattice pattern formed between the first reinforcement boundary portion 2353a and the second reinforcement boundary portion 2353b. The second glass layers 321 and 322 may be disposed at a position not overlapping the third reinforcement area 2353. The second glass layers 321 and 322 may be misaligned with the third reinforcement area 2353 in a thickness direction of the display 230. For example, the first reinforcement boundary portion 2353a and the second reinforcement boundary portion 2353b may be located within the folding area 233 of the display 230, and the first outer glass layer 321 and the second outer glass layer 322 may be disposed at positions not corresponding to the folding area 233 of the display 230. The first outer glass layer 321 may be disposed at a position corresponding to the first display area 231 of the display 230. The second outer glass layer 322 may be disposed at a position corresponding to the second display area 232. Due to the above-described arrangement position of the second glass layer 320, deformation capability in the folding area 233 may be enhanced.

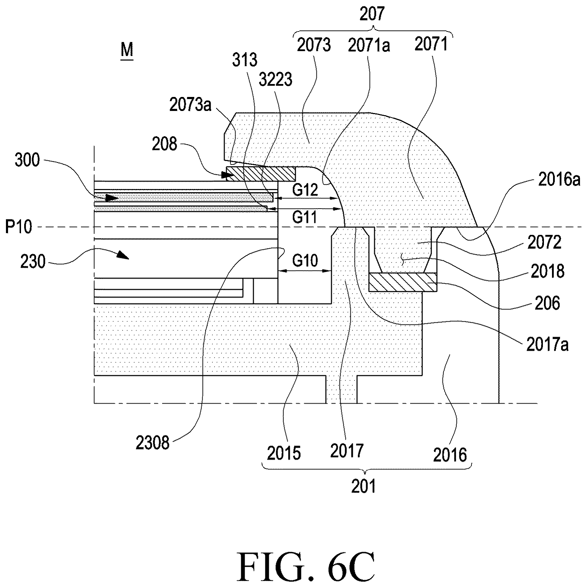

FIG. 6B is a view specifically illustrating the structure of FIG. 6A that is conceptually illustrated. FIG. 6C is an enlarged view illustrating an area M illustrated in FIG. 6B. The components described with reference to FIGS. 6B and 6C may be identical in whole or part to the components described with reference to FIGS. 1 to 6A. The components described with reference to FIGS. 6B and 6C may be identical in whole or part to the components described with reference to FIGS. 7 to 21C.

According to an embodiment, the electronic device 101 may include a hinge assembly 202 rotatably connecting the first housing 210 and the second housing 220. The description of the hinge assembly 202 may be equally applied to the description of the hinge assembly 202 described with reference to FIG. 4. The hinge assembly 202 may include a hinge structure 2022 and a hinge housing 2021. The hinge structure 2022 may rotatably connect the first housing 210 and the second housing 220. The hinge housing 2021 may receive at least a portion of the hinge structure 2022. The cover folding area 303 of the cover 300 may be located between the first cover area 301 and the second cover area 302. The cover folding area 303 may be located to correspond to the hinge assembly 202.

According to an embodiment, the electronic device 101 may include a supporting member 207 coupled to the housing 201. The electronic device 101 may include a bonding member 206 adhering the housing 201 and the supporting member 207. The electronic device 101 may include a finishing member 208 disposed between the cover 300 and the supporting member 207. The supporting member 207 may be referred to as a "deco." The supporting member 207 may be referred to as a "frame." The description of the housing 201 and the supporting member 207 may be equally applied to the description of the housing 201 and the supporting member 205 described with reference to FIGS. 5 and 6A.

According to an embodiment, the housing 201 may include a base plate 2015 and an outer peripheral wall 2016. The display 230 may be seated on the base plate 2015. The outer peripheral wall 2016 may extend along a periphery of the base plate 2015. The housing 201 may include a support wall 2017. The support wall 2017 may protrude from the base plate 2015 toward the supporting member 207. The housing 201 may include a receiving space 2018 formed between the outer peripheral wall 2016 and the support wall 2017. The bonding member 206 may be disposed inside the receiving space 2018.

According to an embodiment, the supporting member 207 may include a support body 2071 and a support protrusion 2072. The support protrusion 2072 may protrude from the support body 2071 toward the housing 201. The support protrusion 2072 may be inserted into the receiving space 2018. The support protrusion 2072 may be located between the outer peripheral wall 2016 and the support wall 2017. The bonding member 206 may adhere the support protrusion 2072 and the housing 201. The support body 2071 may be seated on each of the outer peripheral wall 2016 and the support wall 2017. The outer peripheral wall 2016 may include a first seating surface 2016a on which the support body 2071 is seated. The support wall 2017 may include a second seating surface 2017a on which the support body 2071 is seated.

According to an embodiment, the supporting member 207 may have a curved shape. For example, the supporting member 207 may include a support portion 2073 extending from the support body 2071 toward the cover 300. The support portion 2073 may be integral with the support body 2071. The support portion 2073 may correspond to over at least a portion of the cover 300. The support portion 2073 may cover at least a portion of the cover 300. The finishing member 208 may be disposed between the support portion 2073 and the cover 300. The support portion 2073 may include a support surface 2073a facing the finishing member 208.

According to an embodiment, the display 230 may be spaced apart from the housing 201. The display 230 may be spaced apart from the supporting member 207. The cover 300 may be spaced apart from the housing 201. The cover 300 may be spaced apart from the supporting member 207. The display 230 may be spaced apart to face the housing 201. The cover 300 may be spaced apart to face the supporting member 207. The display 230 may be spaced apart from the support wall 2017. The cover 300 may be spaced apart from the support body 2071. The first seating surface 2016a and the second seating surface 2017a may be located on substantially the same plane P10. A boundary surface P10 of the display 230 and the cover 300 may be located on substantially the same plane P10 as the first seating surface 2016a and the second seating surface 2017a. The support body 2071 may be located on a first side with respect to the boundary surface P10, and the support protrusion 2072 may be located on a second side. The cover 300 may be located on the first side with respect to the boundary surface P10, and the display 230 may be located on the second side with respect to the boundary surface P10.

According to an embodiment, the display 230 and the support wall 2017 may be spaced apart. A gap G10 may be formed between a side surface 2308 of the display 230 and the support wall 2017. The cover 300 and the supporting member 207 may be spaced apart. The supporting member 207 may include an opposing surface 2071a facing the cover 300. The first glass layer 310 may be spaced apart from the supporting member 207. For example, a gap G11 may be formed between an edge 313 of the first glass layer 310 and the opposing surface 2071a. The second glass layer 320 may be spaced apart from the supporting member 207. For example, a gap G12 may be formed between an edge 3223 of the second glass layer 320 and the opposing surface 2071a. A first gap G10 between the side surface 2308 of the display 230 and the support wall 2017 may be smaller than a second gap G11 between the edge 313 of the first glass layer 310 and the opposing surface 2071a. The first gap G10 between the side surface 2308 of the display 230 and the support wall 2017 may be smaller than a third gap G12 between the edge 3223 of the second glass layer 320 and the opposing surface 2071a. The second gap G11 between the edge 313 of the first glass layer 310 and the opposing surface 2071a may be greater than the third gap G12 between the edge 3223 of the second glass layer 320 and the opposing surface 2071a.

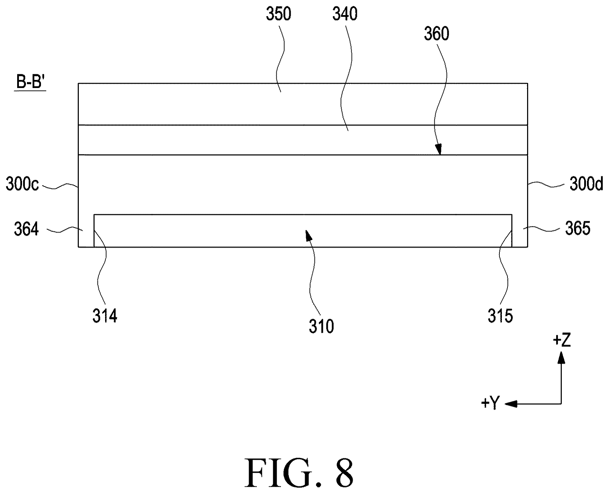

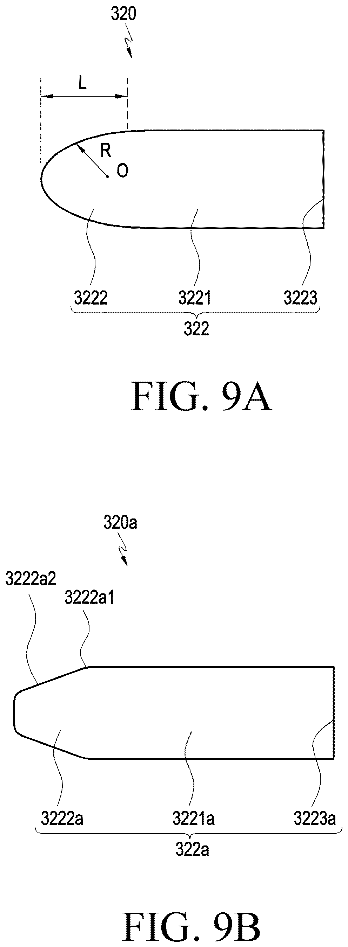

FIG. 7 is a cross-sectional view illustrating the display 230 and the cover 300 taken along reference line A-A' illustrated in FIG. 4. FIG. 8 is a cross-sectional view illustrating the display 230 and the cover 300 taken along reference line B-B' illustrated in FIG. 4. The components described with reference to FIGS. 7 and 8 may be identical in whole or part to the components described with reference to FIGS. 1 to 6C. The components described with reference to FIGS. 7 and 8 may be identical in whole or part to the components described with reference to FIGS. 9A to 21C.

According to an embodiment, the cover 300 may include a first surface 300a and a second surface 300b. The first surface 300a and the second surface 300b may be spaced apart from each other with the folding axis FX therebetween. The first surface 300a may face a first support wall (e.g., the first support wall 2052 of FIG. 6). The second surface 300b may face a second support wall (e.g., the second support wall 2053 of FIG. 6).

According to an embodiment, the inner glass layer 310 may include a first inner glass portion 3111. The first inner glass portion 3111 may be disposed within the first cover area 301. The inner glass layer 310 may include a second inner glass portion 3112. The second inner glass portion 3112 may be disposed within the second cover area 302. The first inner glass portion 3111 and the second inner glass portion 3112 may be spaced apart from each other. The inner glass layer 310 may include a third inner glass portion 3113. The third inner glass portion 3113 may connect the first inner glass portion 3111 and the second inner glass portion 3112. The third inner glass portion 3113 may be disposed within the cover folding area 303. The first inner glass edge 312 may be a portion of the first inner glass portion 3111. The second inner glass edge 313 may be a portion of the second inner glass portion 3112. The first inner glass edge 312 may be spaced apart from the first surface 300a. The second inner glass edge 313 may be spaced apart from the second surface 300b.

According to an embodiment, the cover 300 may include an outer glass layer 320. The outer glass layer 320 may include the first outer glass layer 321 and the second outer glass layer 322. The first outer glass layer 321 may be disposed within the first cover area 301. The second outer glass layer 322 may be disposed within the second cover area 302. The first outer glass layer 321 and the second outer glass layer 322 may be spaced apart from each other. The cover folding area 303 may be formed between the first outer glass layer 321 and the second outer glass layer 322. Due to the above-described structure, flexibility of the inner glass layer 310 in the cover folding area 303 may be enhanced.

According to an embodiment, the first outer glass layer 321 may include a first outer glass portion 3211. The first outer glass portion 3211 may be disposed within the first cover area 301. The first outer glass portion 3211 may be spaced apart from the first inner glass portion 3111. The first outer glass layer 321 may include a first outer glass edge 3212. The first outer glass edge 3212 may protrude from the first outer glass portion 3211 toward the cover folding area 303. The first outer glass edge 3212 may protrude toward the filling layer 360. The first outer glass layer 321 may include a first side portion 3213. The first side portion 3213 may be spaced apart from the first surface 300a. A gap between the first side portion 3213 and the first surface 300a may be smaller than a gap between the first inner glass edge 312 and the first surface 300a.

According to an embodiment, the second outer glass layer 322 may include a second outer glass portion 3221. The second outer glass portion 3221 may be disposed within the second cover area 302. The second outer glass portion 3221 may be spaced apart from the second inner glass portion 3112. The second outer glass layer 322 may include a second outer glass edge 3222. The second outer glass edge 3222 may protrude from the second outer glass portion 3221 toward the cover folding area 303. The second outer glass edge 3222 may protrude toward the filling layer 360. The second outer glass layer 322 may include a second side portion 3223. The second side portion 3223 may be spaced apart from the second surface 300b. A gap between the second side portion 3223 and the second surface 300b may be smaller than a gap between the second inner glass edge 313 and the second surface 300b. A gap G may be formed between the second side portion 3223 and the second inner glass edge 313.

According to an embodiment, the cover 300 may include an adhesive layer 330. The adhesive layer 330 may include a first adhesive layer 331 and a second adhesive layer 332. The adhesive layer 330 may cover an end of the inner glass layer 310 (e.g., the first inner glass edge 312 and the second inner glass edge 313). The adhesive layer 330 may cover an end of the outer glass layer 320 (e.g., the first side portion 3213 and the second side portion 3223).

According to an embodiment, the first adhesive layer 331 may include a first adhesive portion 3311. The first adhesive portion 3311 may be disposed within the first cover area 301. The first adhesive portion 3311 may be disposed between the first inner glass portion 3111 and the first outer glass portion 3211. The first adhesive portion 3311 may face the filling layer 360. The first adhesive layer 331 may include a first inner glass cover portion 3312. The first inner glass cover portion 3312 may be disposed between the first inner glass edge 312 and the first surface 300a. The first inner glass cover portion 3312 may extend from the first adhesive portion 3311 to cover the first inner glass edge 312. The first adhesive layer 331 may include a first outer glass cover portion 3313. The first outer glass cover portion 3313 may be disposed between the first side portion 3213 and the first surface 300a. The first outer glass cover portion 3313 may extend from the first adhesive portion 3311 to cover the first outer glass layer 321. A width of the first inner glass cover portion 3312 may be greater than a width of the first outer glass cover portion 3313. Due to the above-described structure of the first adhesive layer 331, a risk of damage at end portions of the glass layers 310 and 320, which have a high risk of damage, may be decreased. For example, the first adhesive layer 331 is disposed to cover end portions of the glass layers 310 and 320, so as to mitigate impact transmitted to the glass layers 310 and 320.

According to an embodiment, the second adhesive layer 332 may include a second adhesive portion 3321. The second adhesive portion 3321 may be disposed within the second cover area 302. The second adhesive portion 3321 may be disposed between the second inner glass portion 3112 and the second outer glass portion 3221. The second adhesive portion 3321 may face the filling layer 360. The second adhesive layer 332 may include a second inner glass cover portion 3322. The second inner glass cover portion 3322 may be disposed between the second inner glass edge 313 and the second surface 300b. The second inner glass cover portion 3322 may extend from the second adhesive portion 3321 to cover the second inner glass edge 313. The second adhesive layer 332 may include a second outer glass cover portion 3323. The second outer glass cover portion 3323 may be disposed between the second side portion 3223 and the second surface 300b. The second outer glass cover portion 3323 may extend from the second adhesive portion 3321 to cover the second outer glass layer 322. A width of the second inner glass cover portion 3322 may be greater than a width of the second outer glass cover portion 3323. Due to the above-described structure of the second adhesive layer 332, a risk of damage at end portions of the glass layers 310 and 320, which have a high risk of damage, may be decreased. For example, the second adhesive layer 332 is disposed to cover end portions of the glass layers 310 and 320, so as to mitigate impact transmitted to the glass layers 310 and 320.

According to an embodiment, the filling layer 360 may be disposed within the cover folding area 303. At least a portion of the filling layer 360 may be disposed between the first outer glass layer 321 and the second outer glass layer 322. At least a portion of the filling layer 360 may be disposed between the first adhesive layer 331 and the second adhesive layer 332. The filling layer 360 may include a first filling portion 361 disposed between the first adhesive layer 331 and the second adhesive layer 332 and a second filling portion 362 disposed between the first outer glass layer 321 and the second outer glass layer 322.

According to an embodiment, the adhesive film layer 340 may include a first buffer portion 341. The first buffer portion 341 may be disposed within the first cover area 301. The first buffer portion 341 may be disposed between the first outer glass layer 321 and a first protective portion 351. The adhesive film layer 340 may include a second buffer portion 342. The second buffer portion 342 may be disposed within the second cover area 302. The second buffer portion 342 may be disposed between the second outer glass layer 322 and a second protective portion 352. The adhesive film layer 340 may include a third buffer portion 343. The third buffer portion 343 may be disposed within the cover folding area 303. The third buffer portion 343 may be disposed between the filling layer 360 and a third protective portion 353. The third buffer portion 343 may connect the first buffer portion 341 and the second buffer portion 342.

According to an embodiment, the protective layer 350 may include a first protective portion 351. The first protective portion 351 may be disposed within the first cover area 301. The protective layer 350 may include a second protective portion 352. The second protective portion 352 may be disposed within the second cover area 302. The protective layer 350 may include a third protective portion 353. The third protective portion 353 may be disposed within the cover folding area 303. The third protective portion 353 may connect the first protective portion 351 and the second protective portion 352.

According to an embodiment, the cover 300 may include a third surface 300c and a fourth surface 300d. The third surface 300c and the fourth surface 300d may be spaced apart from each other. The filling layer 360 may be disposed between the third surface 300c and the fourth surface 300d.

According to an embodiment, the inner glass layer 310 may include a third inner glass edge 314 and a fourth inner glass edge 315. The third inner glass edge 314 may be spaced apart from the third surface 300c. The fourth inner glass edge 315 may be spaced apart from the fourth surface 300d. The filling layer 360 may include a third filling portion 364 disposed between the third surface 300c and the third inner glass edge 314. The filling layer 360 may include a fourth filling portion 365 disposed between the fourth surface 300d and the fourth inner glass edge 315. The cover 300 according to an embodiment of the disclosure is configured such that the third filling portion 364 and the fourth filling portion 365 cover at least a portion of the inner glass layer 310, thereby reducing impact transmitted to the inner glass layer 310 from outside the cover 300.

According to an embodiment, the hardness of the adhesive layer 330 may be greater than the hardness of the adhesive film layer 340. The hardness of the adhesive layer 330 may be greater than the hardness of the filling layer 360. The hardness of the adhesive film layer 340 may be greater than the hardness of the filling layer 360.

According to an embodiment, the refractive index of the adhesive layer 330, the refractive index of the adhesive film layer 340, and the refractive index of the filling layer 360 may be substantially the same as one another.

According to an embodiment, the viscosity of the filling layer 360 may be greater than the viscosity of the adhesive layer 330.

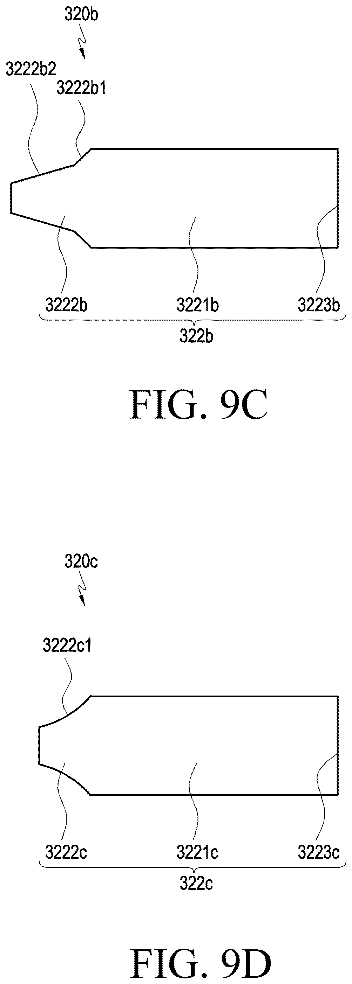

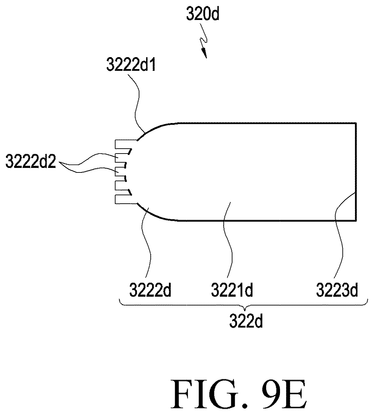

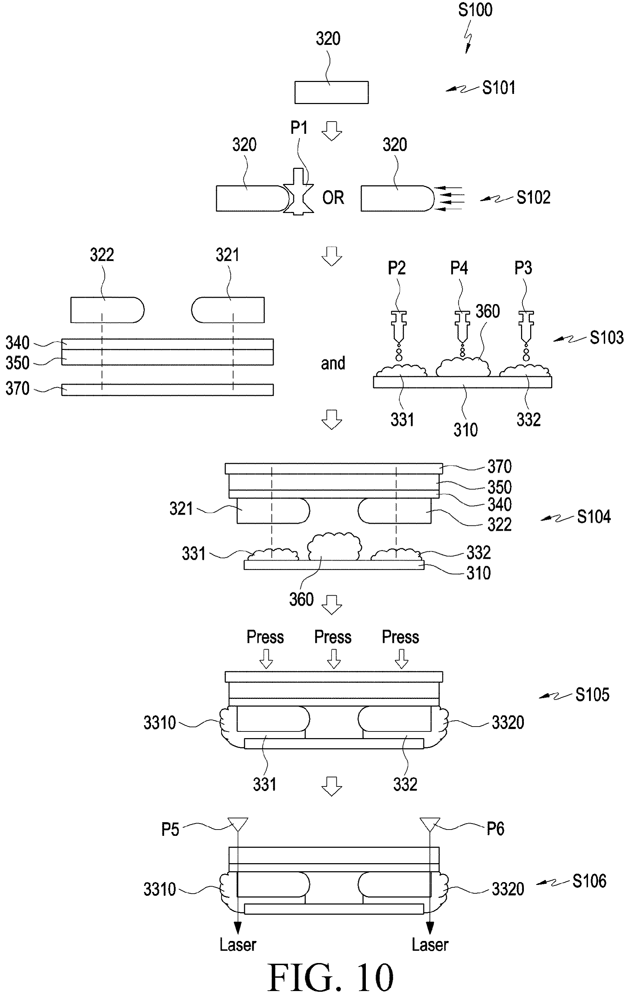

FIG. 9A is a cross-sectional view illustrating the outer glass layer 320 according to an embodiment of the disclosure. FIG. 9B is a cross-sectional view illustrating an outer glass layer 320a according to an embodiment of the disclosure. FIG. 9C is a cross-sectional view illustrating an outer glass layer 320b according to an embodiment of the disclosure. FIG. 9D is a cross-sectional view illustrating an outer glass layer 320c according to an embodiment of the disclosure. FIG. 9E is a cross-sectional view illustrating an outer glass layer 320d according to an embodiment of the disclosure. The components described with reference to FIGS. 9A to 9E may be identical in whole or part to the components described with reference to FIGS. 1 to 8. The components described with reference to FIGS. 9A to 9E may be identical in whole or part to the components described with reference to FIGS. 10 to 21C.

Referring to FIGS. 9A to 9E, the outer glass layer 320 may include a second outer glass layer 322. The content described with reference to FIGS. 9A to 9E may be equally applied to the first outer glass layer (e.g., the first outer glass layer 321 of FIG. 7).

Referring to FIG. 9A, the second outer glass layer 322 may include a second outer glass portion 3221, a second outer glass edge 3222, and a second side portion 3223. The second outer glass edge 3222 may have a curved shape. The second outer glass edge 3222 may be formed to be convex toward the filling layer (e.g., the filling layer 360 of FIG. 7). The second outer glass edge 3222 may have a curved surface spaced apart by a predetermined distance R from a predetermined center O. The curvature of the second outer glass edge 3222 may be 0.1R or more. The second outer glass edge 3222 may extend convexly by a predetermined length L from the second outer glass portion 3221. The length L of the second outer glass edge 3222 may be 3 micrometers or more.

An edge (e.g., the edges 3222, 3222a, 3222b, 3222c, and 3222d of FIGS. 9A to 9E) of an outer glass layer (e.g., the outer glass layers 320, 320a, 320b, 320c, and 320d of FIGS. 9A to 9E) according to various embodiments of the disclosure may have a curvature. For example, an edge (e.g., the edges 3222, 3222a, 3222b, 3222c, and 3222d of FIGS. 9A to 9E) of an outer glass layer (e.g., the outer glass layers 320, 320a, 320b, 320c, and 320d of FIGS. 9A to 9E) may have a curvature of 0.1R or more. Due to the above-described structure, visibility of the electronic device 101 according to various embodiments of the disclosure may be enhanced. For example, because an edge (e.g., the edges 3222, 3222a, 3222b, 3222c, and 3222d of FIGS. 9A to 9E) of an outer glass layer (e.g., the outer glass layers 320, 320a, 320b, 320c, and 320d of FIGS. 9A to 9E) has a curvature of 0.1R or more, visibility of the cover (e.g., the cover 300 of FIG. 5) and the display (e.g., the display 230 of FIG. 5) may be enhanced.

Referring to FIG. 9B, a second outer glass layer 322a may include a second outer glass portion 3221a, a second outer glass edge 3222a, and a second side portion 3223a. The second outer glass edge 3222a may protrude from the second outer glass portion 3221a. The second outer glass edge 3222a may include a first edge portion 3222a1 extending curvedly from the second outer glass portion 3221a and a second edge portion 3222a2 extending inclinedly from the first edge portion 3222a1.

Referring to FIG. 9C, a second outer glass layer 322b may include a second outer glass portion 3221b, a second outer glass edge 3222b, and a second side portion 3223b. The second outer glass edge 3222b may protrude from the second outer glass portion 3221b. The second outer glass edge 3222b may include a first edge portion 3222b1 extending inclinedly from the second outer glass portion 3221b and a second edge portion 3222b2 extending inclinedly from the first edge portion 3222b1. An inclination angle of the first edge portion 3222b1 and an inclination angle of the second edge portion 3222b2 may be different from each other.

Referring to FIG. 9D, a second outer glass layer 322c may include a second outer glass portion 3221c, a second outer glass edge 3222c, and a second side portion 3223c. The second outer glass edge 3222c may protrude from the second outer glass portion 3221c. The second outer glass edge 3222c may include a first edge portion 3222c1 extending curvedly from the second outer glass portion 3221c. The first edge portion 3222c1 may be formed to be concave toward the second outer glass portion 3221c.

Referring to FIG. 9E, a second outer glass layer 322d may include a second outer glass portion 3221d, a second outer glass edge 3222d, and a second side portion 3223d. The second outer glass edge 3222d may protrude from the second outer glass portion 3221d. The second outer glass edge 3222d may include a first edge portion 3222d1 extending curvedly from the second outer glass portion 3221d. The second outer glass edge 3222d may include a plurality of edge protrusions 3222d2 protruding from the first edge portion 3222d1. The plurality of edge protrusions 3222d2 may protrude toward the filling layer (e.g., the filling layer 360 of FIG. 7). The second outer glass layer 322d according to an embodiment of the disclosure includes a plurality of edge protrusions 3222d2 protruding toward the filling layer 360, thereby increasing a contact area between the filling layer 360 and the outer glass layer 320. Because a contact area between the filling layer 360 and the outer glass layer 320 is increased, the second outer glass layer 322d according to an embodiment of the disclosure may enhance bonding strength between the outer glass layer 320 and the filling layer 360.

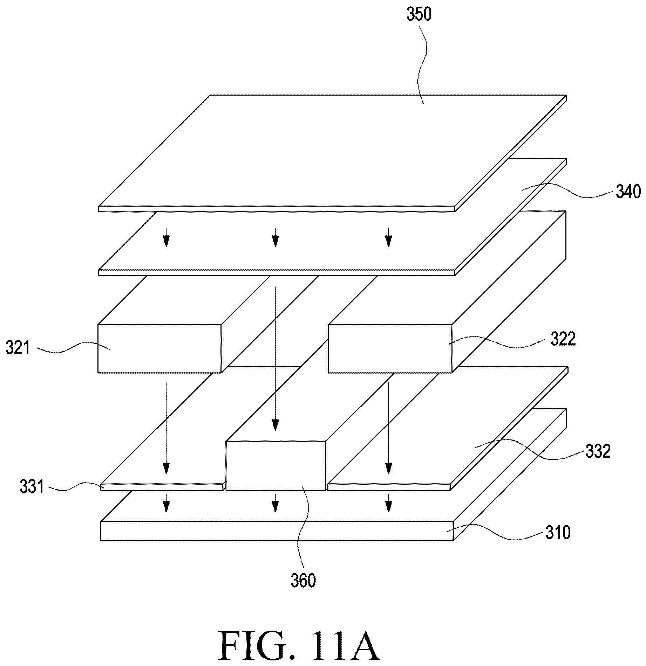

FIG. 10 is a view illustrating a manufacturing process of the cover 300 according to an embodiment of the disclosure. The components described with reference to FIG. 10 may be identical in whole or part to the components described with reference to FIGS. 1 to 9E. The components described with reference to FIG. 10 may be identical in whole or part to the components described with reference to FIGS. 11A to 21C.

According to an embodiment, a manufacturing method S100 of the cover 300 may include a first process S101, a second process S102, a third process S103, a fourth process S104, a fifth process S105, and a sixth process S106.

According to an embodiment, the manufacturing method S100 of the cover 300 may include the first process S101 of preparing the outer glass layer 320.

According to an embodiment, the manufacturing method S100 of the cover 300 may include the second process S102 of processing the outer glass layer 320. In the second process S102, a surface of the outer glass layer 320 may be processed by a processing member P1.

According to an embodiment, the manufacturing method S100 of the cover 300 may include the third process S103 of laminating the outer glass layers 321 and 322, the adhesive film layer 340, the protective layer 350, and a molding plate 370. The manufacturing method S100 of the cover 300 may include the third process S103 of applying the adhesive layers 331 and 332 and the filling layer 360 to the inner glass layer 310. The adhesive layers 331 and 332 may be applied to a surface of the inner glass layer 310 through injection members P2 and P3. The adhesive layers 331 and 332 may include a material having viscosity. The filling layer 360 may be applied to a surface of the inner glass layer 310 through an injection member P4. The filling layer 360 may include a resin material.

According to an embodiment, the manufacturing method S100 of the cover 300 may include the fourth process S104 of laminating a plurality of layers 310, 321, 322, 331, 332, 340, 350, 360, and 370.

According to an embodiment, the manufacturing method S100 of the cover 300 may include the fifth process S105 of pressing the laminated layers 310, 321, 322, 331, 332, 340, 350, 360, and 370. A portion 3310 of the first adhesive layer 331 may protrude to an outside of the cover 300. A portion 3320 of the second adhesive layer 332 may protrude to the outside of the cover 300.

According to an embodiment, the manufacturing method S100 of the cover 300 may include the sixth process S106 of cutting the portions 3310 and 3320 of the adhesive layers 331 and 332 protruding to the outside of the cover 300. The protruding portions 3310 and 3320 may be cut by cutting members P5 and P6. The protruding portions 3310 and 3320 may be laser-processed.

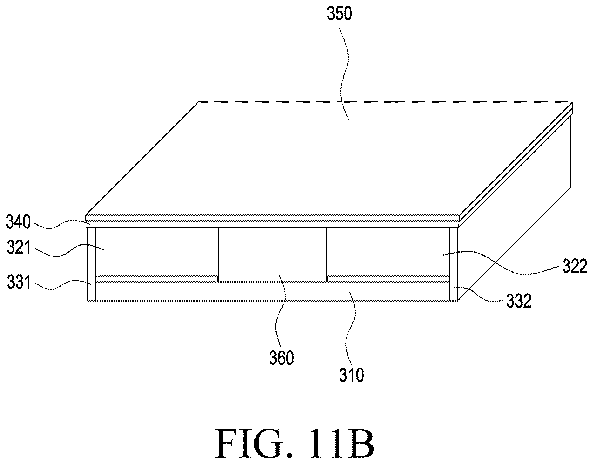

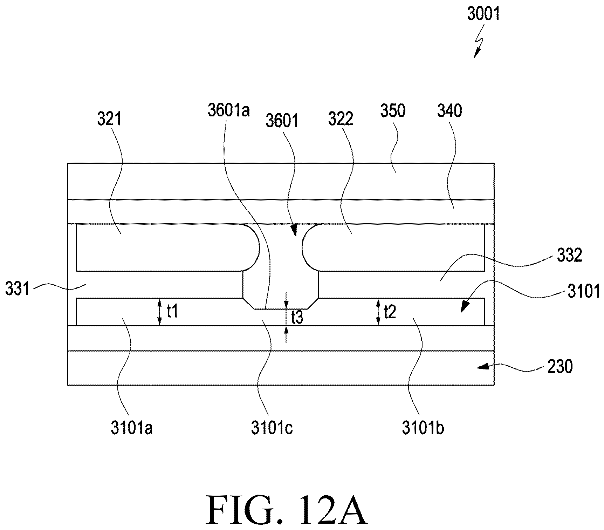

FIG. 11A is an exploded perspective view illustrating the cover 300. FIG. 11B is a perspective view illustrating the cover 300 in an assembled state. The components described with reference to FIGS. 11A and 11B may be identical in whole or part to the components described with reference to FIGS. 1 to 10. The components described with reference to FIGS. 11A and 11B may be identical in whole or part to the components described with reference to FIGS. 12A to 21C.

According to an embodiment, the first adhesive layer 331 may connect the inner glass layer 310 and the first outer glass layer 321. The second adhesive layer 332 may connect the inner glass layer 310 and the second outer glass layer 322. The filling layer 360 may be disposed between the first adhesive layer 331 and the second adhesive layer 332 that are spaced apart from each other. The filling layer 360 may be disposed between the first outer glass layer 321 and the second outer glass layer 322 that are spaced apart from each other. The adhesive film layer 340 and the protective layer 350 may be laminated on upper sides of the outer glass layers 321 and 322.

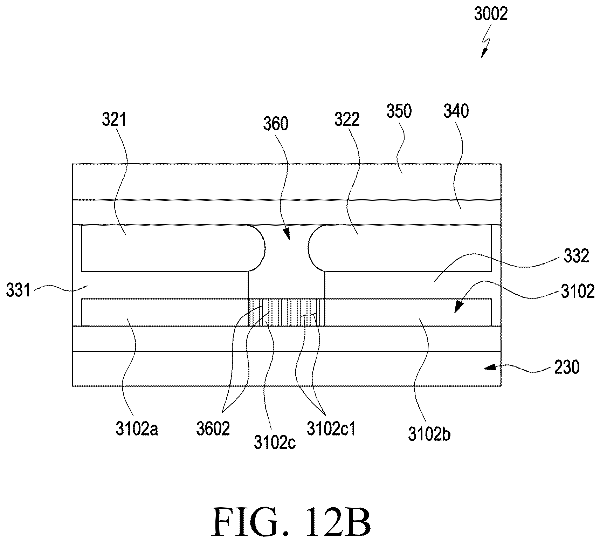

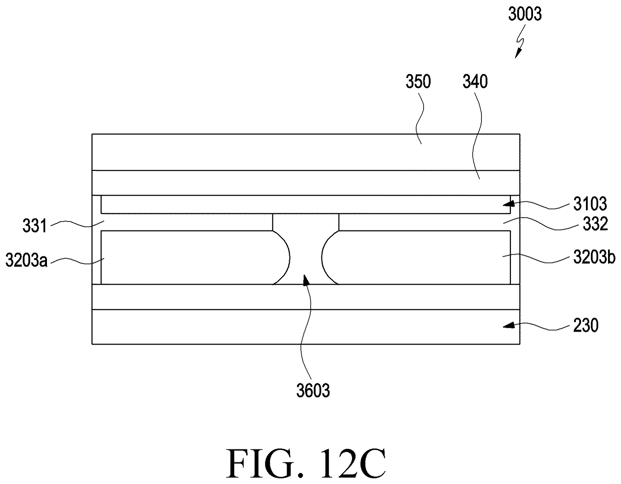

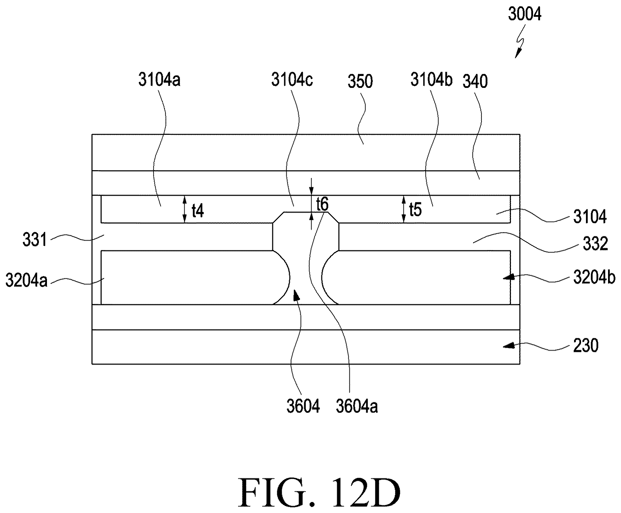

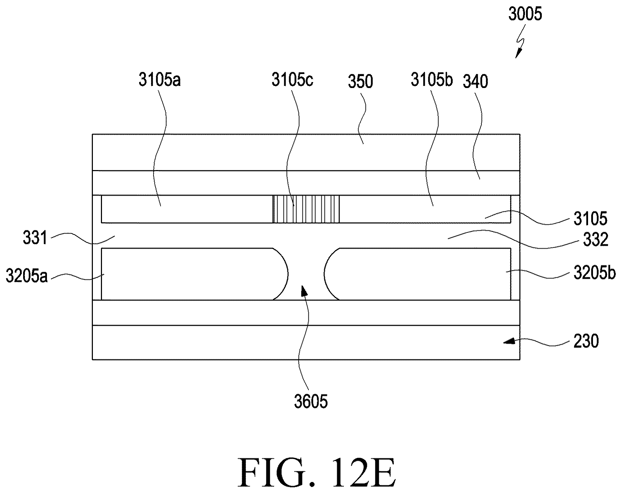

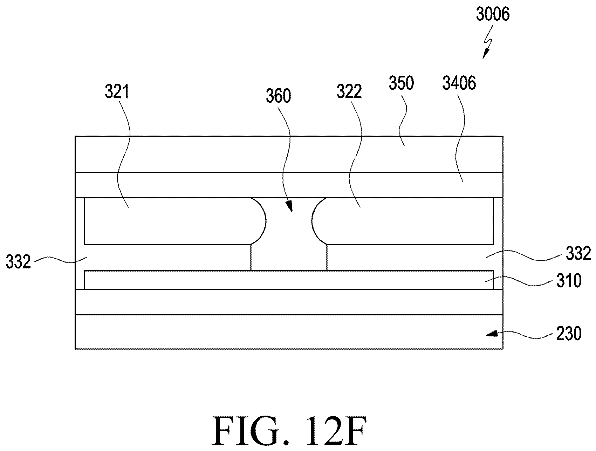

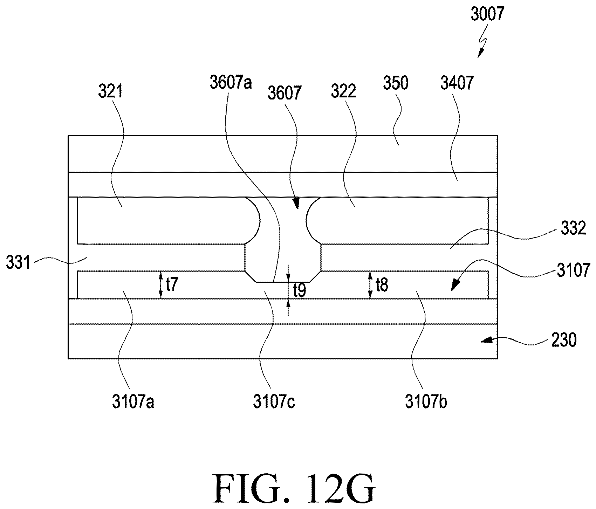

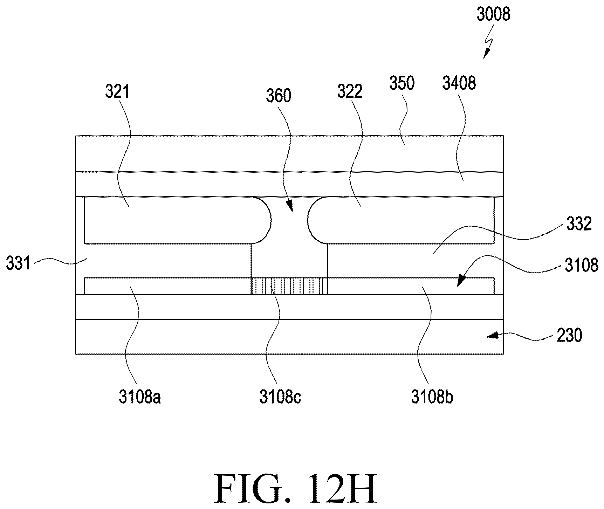

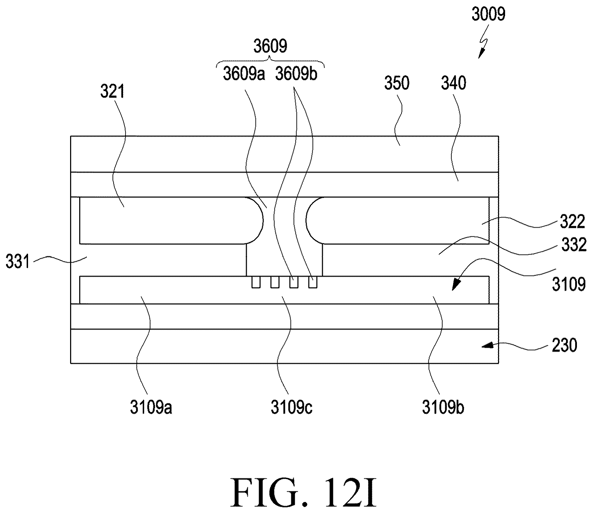

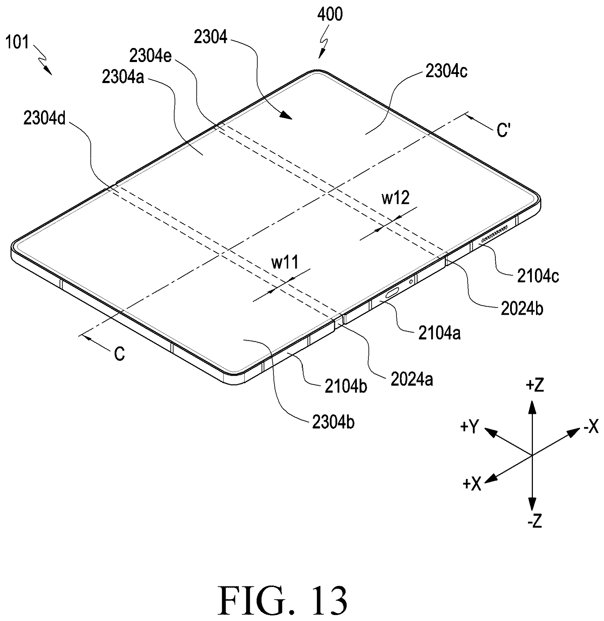

FIG. 12A is a cross-sectional view illustrating a cover 3001 and the display 230 according to an embodiment of the disclosure. FIG. 12B is a cross-sectional view illustrating a cover 3002 and the display 230 according to an embodiment of the disclosure. FIG. 12C is a cross-sectional view illustrating a cover 3003 and the display 230 according to an embodiment of the disclosure. FIG. 12D is a cross-sectional view illustrating a cover 3004 and the display 230 according to an embodiment of the disclosure. FIG. 12E is a cross-sectional view illustrating a cover 3005 and the display 230 according to an embodiment of the disclosure. FIG. 12F is a cross-sectional view illustrating a cover 3006 and the display 230 according to an embodiment of the disclosure. FIG. 12G is a cross-sectional view illustrating a cover 3007 and the display 230 according to an embodiment of the disclosure. FIG. 12H is a cross-sectional view illustrating a cover 3008 and the display 230 according to an embodiment of the disclosure. FIG. 12I is a cross-sectional view illustrating a cover 3009 and the display 230 according to an embodiment of the disclosure. The components described with reference to FIGS. 12A to 12I may be identical in whole or part to the components described with reference to FIGS. 1 to 11B. The components described with reference to FIGS. 12A to 12I may be identical in whole or part to the components described with reference to FIGS. 13 to 21C.

Referring to FIG. 12A, the cover 3001 may include an inner glass layer 3101 and a filling layer 3601. The inner glass layer 3101 may have a different thickness in a length direction thereof. For example, the inner glass layer 3101 may include a first inner glass portion 3101a corresponding to the first outer glass layer 321, a second inner glass portion 3101b corresponding to the second outer glass layer 322, and a third inner glass portion 3101c corresponding to the filling layer 3601. A thickness t1 of the first inner glass portion 3101a may be greater than a thickness t3 of the third inner glass portion 3101c. A thickness t2 of the second inner glass portion 3101b may be greater than the thickness t3 of the third inner glass portion 3101c. The filling layer 3601 may include a filling boundary surface 3601a contacting the third inner glass portion 3101c. The thickness t1, t2, or t3 at each portion 3101a, 3101b, or 3101c of the inner glass layer 3101 may be smaller than the thickness of the outer glass layers 321 and 322.

Referring to FIG. 12B, the cover 3002 may include an inner glass layer 3102. The inner glass layer 3102 may include a lattice pattern. For example, the inner glass layer 3102 may include a first inner glass portion 3102a corresponding to the first outer glass layer 321, a second inner glass portion 3102b corresponding to the second outer glass layer 322, and a third inner glass portion 3102c corresponding to the filling layer 360. The third inner glass portion 3102c may have a lattice pattern. For example, the third inner glass portion 3102c may include a plurality of glass holes 3102c1. The plurality of glass holes 3102c1 may be formed between the first inner glass portion 3102a and the second inner glass portion 3102b. The plurality of glass holes 3102c1 of the inner glass layer 3102 according to an embodiment of the disclosure may be hollow. At least a portion of the filling layer 360 may be disposed inside the plurality of glass holes 3102c1 of the inner glass layer 3102 according to an embodiment of the disclosure. For example, the filling layer 360 may include a glass filling portion 3602 located inside the plurality of glass holes 3102c1. The thickness of the inner glass layer 3102 including the lattice pattern may be smaller than the thickness of the outer glass layers 321 and 322.

Referring to FIG. 12C, the cover 3003 may include a first glass layer 3103, second glass layers 3203a and 3203b, and a filling layer 3603. The inner glass layer 310 and the outer glass layers 321 and 322 of FIG. 12A may be switched in position with respect to each other. For example, as illustrated in FIG. 12C, the first glass layer 3103 may be located farther from the display 230 than the second glass layers 3203a and 3203b. The inner glass layer 310 may be referred to as a "first glass layer." The outer glass layer 320 may be referred to as a "second glass layer." A 2-1th glass layer 3203a may be disposed between the first adhesive layer 331 and the display 230. A 2-2th glass layer 3203b may be disposed between the second adhesive layer 332 and the display 230. The filling layer 3603 may be disposed between the first glass layer 3103 and the display 230. The thickness of the first glass layer 3103 may be smaller than the thickness of the second glass layers 3203a and 3203b.

Referring to FIG. 12D, the cover 3004 may include a first glass layer 3104, second glass layers 3204a and 3204b, and a filling layer 3604. Unlike FIG. 12C, the first glass layer 3104 may have a different thickness in a length direction thereof. For example, the first glass layer 3104 may include a first glass portion 3104a corresponding to the 2-1th glass layer 3204a, a second glass portion 3104b corresponding to the 2-2th glass layer 3204b, and a third glass portion 3104c corresponding to the filling layer 3604. A thickness t4 of the first glass portion 3104a may be greater than a thickness t6 of the third glass portion 3104c. A thickness t5 of the second glass portion 3104b may be greater than the thickness t6 of the third glass portion 3104c. The filling layer 3604 may include a filling boundary surface 3604a contacting the third glass portion 3104c. The thickness t4, t5, or t6 at each portion 3104a, 3104b, or 3104c of the first glass layer 3104 may be smaller than the thickness of the second glass layers 3204a and 3204b.

Referring to FIG. 12E, the cover 3005 may include a first glass layer 3105, second glass layers 3205a and 3205b, and a filling layer 3605. Unlike FIG. 12C, the first glass layer 3105 may have a lattice pattern. For example, the first glass layer 3105 may include a first glass portion 3105a corresponding to the 2-1th glass layer 3205a, a second glass portion 3105b corresponding to the 2-2th glass layer 3205b, and a third glass portion 3105c corresponding to the filling layer 3605. The third glass portion 3105c may include a lattice pattern. The thickness of the first glass layer 3105 including the lattice pattern may be smaller than the thickness of the second glass layers 3205a and 3205b.

Referring to FIG. 12F, the cover 3006 may include an adhesive film layer 3406. The adhesive film layer 3406 may include the same material as the filling layer 360. The adhesive film layer 3406 may include a resin material. The material of the adhesive film layer 3406 is not limited to thereto. For example, the adhesive film layer 3406 may include a pressure sensitive adhesive (PSA) material. The filling layer 360 may include a PSA material. The thickness of the inner glass layer 310 may be smaller than the thickness of the outer glass layers 321 and 322.

Referring to FIG. 12G, the cover 3007 may include an inner glass layer 3107, an adhesive film layer 3407, and a filling layer 3607. The adhesive film layer 3407 may include the same material as the filling layer 3607. The adhesive film layer 3407 may include a resin material. The inner glass layer 3107 may have a different thickness in a length direction thereof. For example, the inner glass layer 3107 may include a first inner glass portion 3107a corresponding to the first outer glass layer 321, a second inner glass portion 3107b corresponding to the second outer glass layer 322, and a third inner glass portion 3107c corresponding to the filling layer 3607. A thickness t7 of the first inner glass portion 3107a may be greater than a thickness t9 of the third inner glass portion 3107c. A thickness t8 of the second inner glass portion 3107b may be greater than the thickness t9 of the third inner glass portion 3107c. The filling layer 3607 may include a filling boundary surface 3607a contacting the third inner glass portion 3107c. The thickness t7, t8, or t9 at each portion 3107a, 3107b, or 3107c of the first inner glass layer 3107 may be smaller than the thickness of the outer glass layers 321 and 322.

Referring to FIG. 12H, the cover 3008 may include an inner glass layer 3108 and an adhesive film layer 3408. The adhesive film layer 3408 may include the same material as the filling layer 360. The adhesive film layer 3408 may include a resin material. The inner glass layer 3108 may include a lattice pattern. For example, the inner glass layer 3108 may include a first inner glass portion 3108a corresponding to the first outer glass layer 321, a second inner glass portion 3108b corresponding to the second outer glass layer 322, and a third inner glass portion 3108c corresponding to the filling layer 360. The third inner glass portion 3108c may have a lattice pattern. The thickness of the inner glass layer 3108 including the lattice pattern may be smaller than the thickness of the outer glass layers 321 and 322.

Referring to FIG. 12I, the cover 3009 may include an inner glass layer 3109 and a filling layer 3609. A portion of the filling layer 3609 may be inserted into the inner glass layer 3109. For example, the filling layer 3609 may include a filling body 3609a disposed between the first adhesive layer 331 and the second adhesive layer 332 and a filling protrusion 3609b protruding from the filling body 3609a into the inner glass layer 3109. The inner glass layer 3109 may include a first inner glass portion 3109a corresponding to the first outer glass layer 321, a second inner glass portion 3109b corresponding to the second outer glass layer 322, and a third inner glass portion 3109c into which the filling protrusion 3609b is inserted. The thickness of the inner glass layer 3109 including the third inner glass portion 3109c may be smaller than the thickness of the outer glass layers 321 and 322.

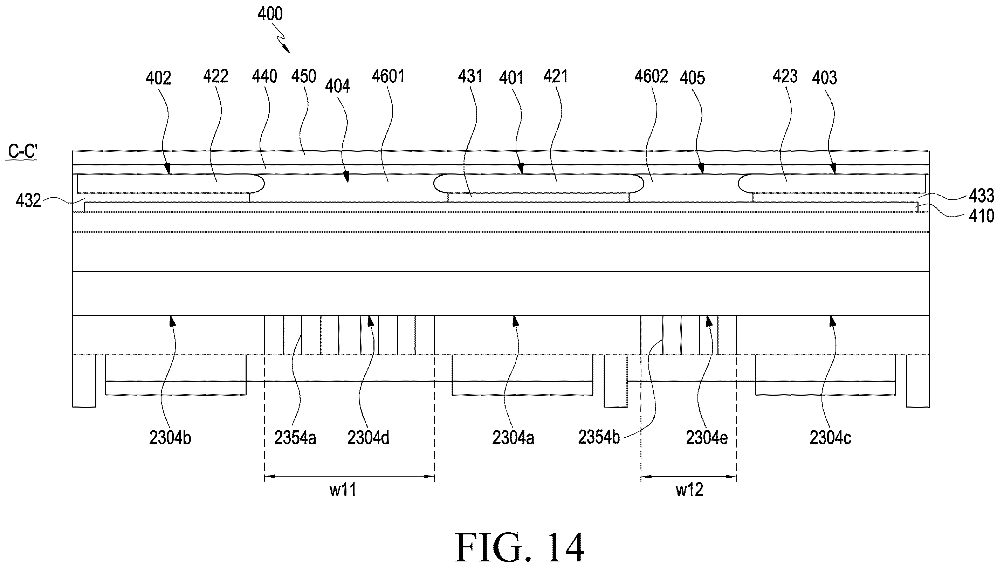

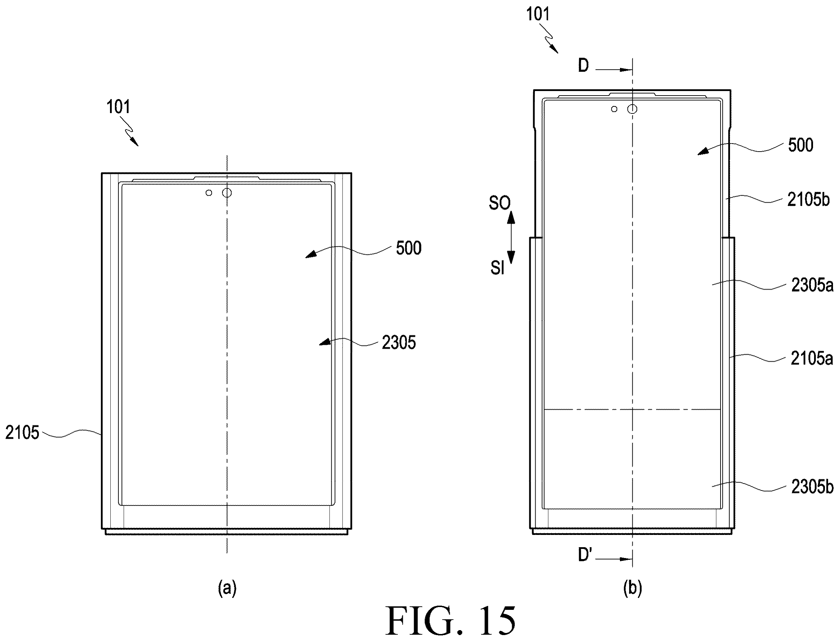

FIG. 13 is a perspective view illustrating an electronic device 400 according to an embodiment of the disclosure. FIG. 14 is a portion of a cross-sectional view taken along reference line C-C' illustrated in FIG. 13. The components described with reference to FIGS. 13 and 14 may be identical in whole or part to the components described with reference to FIGS. 1 to 12I. The components described with reference to FIGS. 13 and 14 may be identical in whole or part to the components described with reference to FIGS. 15 to 21C.

According to an embodiment, the electronic device 101 may include a first housing 2104a, a second housing 2104b rotatably connected to the first housing 2104a, and a third housing 2104c rotatably connected to the first housing 2104a. The electronic device 101 may include a first hinge 2024a rotatably connecting the first housing 2104a and the second housing 2104b. The electronic device 101 may include a second hinge 2024b rotatably connecting the first housing 2104a and the third housing 2104c.

According to an embodiment, the electronic device 101 may include a display 2304. At least a portion of the display 2304 may be folded or unfolded. The display 2304 may include a first display area 2304a corresponding to the first housing 2104a, a second display area 2304b corresponding to the second housing 2104b, and a third display area 2304c corresponding to the third housing 2104c. The display 2304 may include a first folding area 2304d corresponding to the first hinge 2024a and a second folding area 2304e corresponding to the second hinge 2024b. The display 2304 may include a first lattice area 2354a disposed in the first folding area 2304d. The display 2304 may include a second lattice area 2354b disposed in the second folding area 2304e.

According to an embodiment, the electronic device 101 may include a cover 400. The cover 400 may include a first cover area 401 corresponding to the first display area 2304a, a second cover area 402 corresponding to the second display area 2304b, and a third cover area 403 corresponding to the third display area 2304c. The cover 400 may include a first cover folding area 404 corresponding to the first folding area 2304d and a second cover folding area 405 corresponding to the second folding area 2304e.

According to an embodiment, the cover 400 may include an inner glass layer 410, outer glass layers 421, 422, and 423, adhesive layers 431, 432, and 433, an adhesive film layer 440, a protective layer 450, and filling layers 4601 and 4602. The description of the above-described components (e.g., the inner glass layer 410, the outer glass layers 421, 422, and 423, the adhesive layers 431, 432, and 433, the adhesive film layer 440, the protective layer 450, and the filling layers 4601 and 4602) may be equally applied to the description of the components (e.g., the inner glass layer 310, the outer glass layer 320, the adhesive layers 331 and 332, the adhesive film layer 340, the protective layer 350, and the filling layer 360) described with reference to FIGS. 1 to 12I.

According to an embodiment, the inner glass layer 410 may be configured such that at least a portion thereof is folded or unfolded. The inner glass layer 410 may extend to correspond to all of the first, second, and third display areas 2304a, 2304b, and 2304c.

According to an embodiment, the outer glass layers 421, 422, and 423 may include a first outer glass layer 421, a second outer glass layer 422, and a third outer glass layer 423. The first outer glass layer 421 may be disposed within the first cover area 401. The second outer glass layer 422 may be disposed within the second cover area 402. The third outer glass layer 423 may be disposed within the third cover area 403.

According to an embodiment, the adhesive layers 431, 432, 433 may include a first adhesive layer 431, a second adhesive layer 432, and a third adhesive layer 433. The first adhesive layer 431 may be disposed within the first cover area 401. The first adhesive layer 431 may be disposed between the inner glass layer 410 and the first outer glass layer 421. The second adhesive layer 432 may be disposed within the second cover area 402. The second adhesive layer 432 may be disposed between the inner glass layer 410 and the second outer glass layer 422. The third adhesive layer 433 may be disposed within the third cover area 403. The third adhesive layer 433 may be disposed between the inner glass layer 410 and the third outer glass layer 423.

According to an embodiment, the adhesive film layer 440 may extend to correspond to all of the first, second, and third cover areas 401, 402, and 403 and the first and second cover folding areas 404 and 405. The protective layer 450 may extend to correspond to all of the first, second, and third cover areas 401, 402, and 403 and the first and second cover folding areas 404 and 405. The adhesive film layer 440 may extend to correspond to all of the first, second, and third display areas 2304a, 2304b, and 2304c. The protective layer 450 may extend to correspond to all of the first, second, and third display areas 2304a, 2304b, and 2304c.

According to an embodiment, the filling layers 4601 and 4602 may include a first filling layer 4601 and a second filling layer 4602. The first filling layer 4601 may be disposed within the first cover folding area 404. The first filling layer 4601 may be disposed between the first outer glass layer 421 and the second outer glass layer 422. The first filling layer 4601 may be disposed between the first adhesive layer 431 and the second adhesive layer 432. The second filling layer 4602 may be disposed within the second cover folding area 405. The second filling layer 4602 may be disposed between the first outer glass layer 421 and the third outer glass layer 423. The second filling layer 4602 may be disposed between the first adhesive layer 431 and the third adhesive layer 433.

According to an embodiment, a first width w11 of the first hinge 2024a and a second width w12 of the second hinge 2024b may be different from each other. For example, the first width w11 of the first hinge 2024a may be greater than the second width w12 of the second hinge 2024b. In the electronic device 101 illustrated in FIG. 13, after the third housing 2104c is folded over the first housing 2104a, the second housing 2104b may be folded over the third housing 2104c that is folded over the first housing 2104a. For example, after the third display area 2304c is folded toward the first display area 2304a first, the second display area 2304b may be folded toward a rear surface of the third housing 2104c. In a state in which the first, second, and third housings 2104a, 2104b, and 2104c are folded, the first hinge 2024a may surround a side surface of the third housing 2104c. The electronic device 101 according to an embodiment of the disclosure may be configured such that the third housing 2104c is folded toward a first surface of the first housing 2104a and the second housing 2104b is folded toward a second surface of the first housing 2104a opposite to the first surface. For example, the third display area 2304c may be folded toward the first display area 2304a, and the second display area 2304b may be folded to face a direction opposite to the first display area 2304a (e.g., -Z direction).

According to an embodiment, the first lattice area 2354a may be formed at a position corresponding to the first hinge 2024a. The second lattice area 2354b may be formed at a position corresponding to the second hinge 2024b. A first width w11 of the first lattice area 2354a may be greater than a second width w12 of the second lattice area 2354b. The first cover folding area 404 may be formed at a position corresponding to the first lattice area 2354a. The second cover folding area 405 may be formed at a position corresponding to the second lattice area 2354b. The first filling layer 4601 may be disposed in the first cover folding area 404. The first filling layer 4601 may be disposed between the first outer glass layer 421 and the second outer glass layer 422. The second filling layer 4602 may be disposed in the second cover folding area 405. The second filling layer 4602 may be disposed between the first outer glass layer 421 and the third outer glass layer 423. The first filling layer 4601 may correspond to the first lattice area 2354a, and the second filling layer 4602 may correspond to the second lattice area 2354b. A width of the first filling layer 4601 may be greater than a width of the second filling layer 4602.

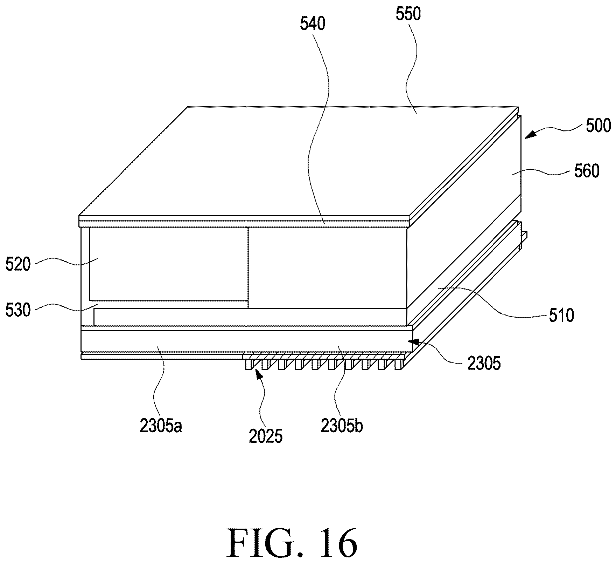

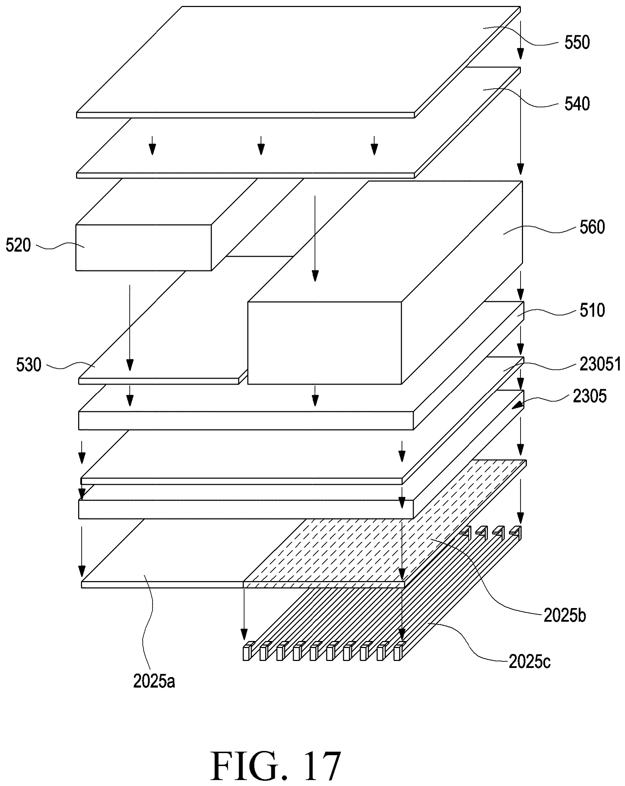

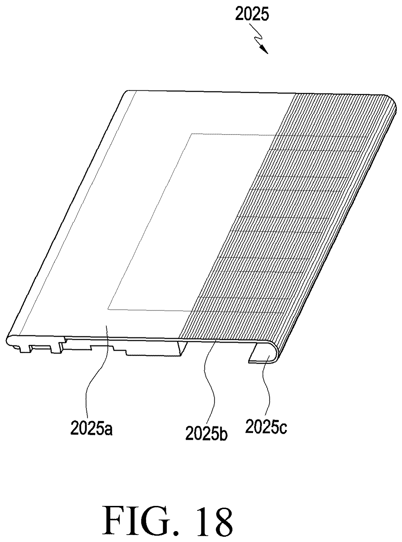

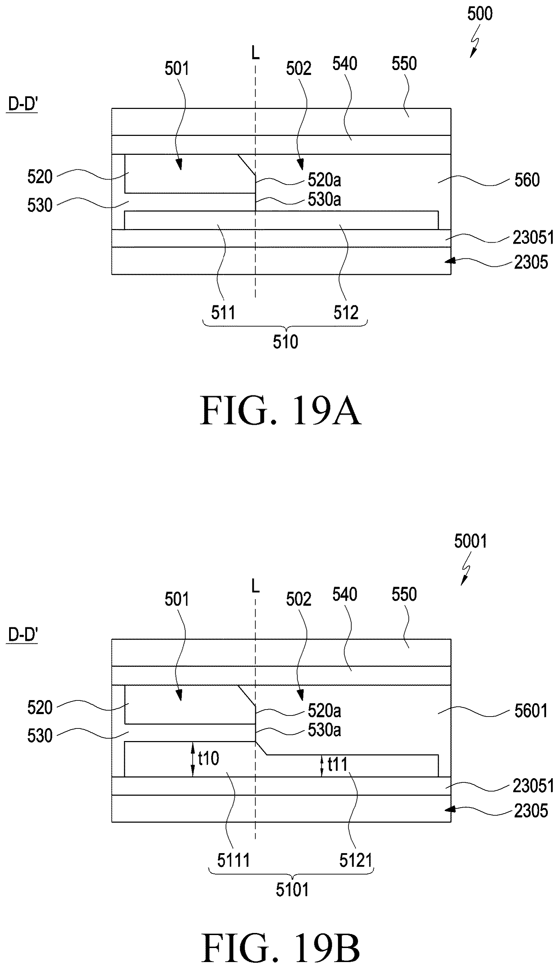

FIG. 15 is a view illustrating an electronic device 101 according to an embodiment of the disclosure. FIG. 16 is a portion of the electronic device 101 of FIG. 15. FIG. 17 is an exploded view illustrating the structure illustrated in FIG. 16. FIG. 18 is a portion of the structure illustrated in FIG. 16. The components described with reference to FIGS. 15 to 18 may be identical in whole or part to the components described with reference to FIGS. 1 to 14. The components described with reference to FIGS. 15 to 18 may be identical in whole or part to the components described with reference to FIGS. 19A to 21C.

According to an embodiment, the electronic device 101 may include a housing 2105 and a display 2305. The housing 2105 may include a first housing 2105a and a second housing 2105b movably disposed with respect to the first housing 2105a. The display 2305 may include a first display area 2305a movably disposed with respect to the housing 2105 and a second display area 2305b distinguished from the first display area 2305a. The display 2305 may move in a first direction SO (slide-out direction) with respect to the first housing 2105a. The display 2305 may move in a second direction SI (slide-in direction) with respect to the first housing 2105a. When the display 2305 moves in the first direction SO, the second display area 2305b may be exposed to an outside. When the display 2305 moves in the second direction SI, the second display area 2305b may be concealed inside the housing 2105.

According to an embodiment, the electronic device 101 may include a supporting member 2025. The supporting member 2025 may support the display 2305. The supporting member 2025 may include a first support portion 2025a on which the first display area 2305a is seated. The supporting member 2025 may include a second support portion 2025b on which the second display area 2305b is seated. The second support portion 2025b may include a lattice pattern. The supporting member 2025 may include a support bar 2025c. The support bar 2025c may be disposed in the second support portion 2025b. The plurality of support bars 2025c may be disposed to be spaced apart along a movement direction of the display 2305.

According to an embodiment, the electronic device 101 may include a cover 500. The cover 500 may move together with the display 2305. The electronic device 101 may include an adhesive member 23051. The adhesive member 23051 may be disposed between the display 2305 and the cover 500.

According to an embodiment, the cover 500 may include an inner glass layer 510, an outer glass layer 520, an adhesive layer 530, an adhesive film layer 540, a protective layer 550, and a filling layer 560. The outer glass layer 520 may be spaced apart from the inner glass layer 510. The adhesive layer 530 may be disposed between the inner glass layer 510 and the outer glass layer 520. The filling layer 560 may be disposed between the inner glass layer 510 and the adhesive film layer 540.

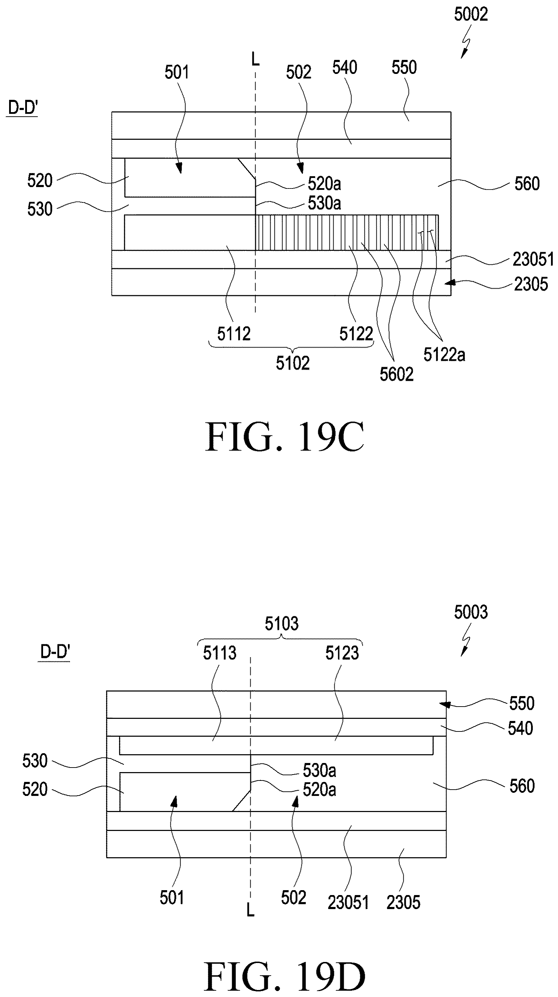

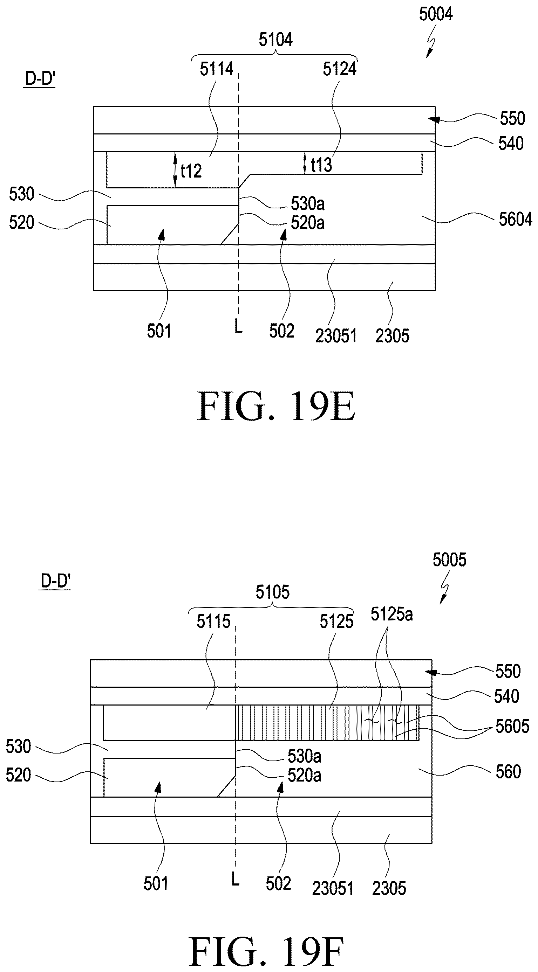

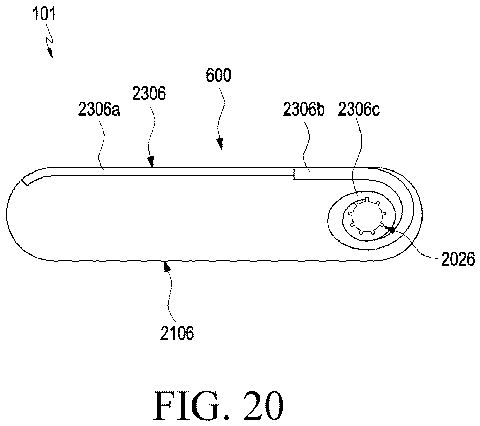

FIG. 19A is a view illustrating a cross-sectional view taken along reference line D-D' illustrated in FIG. 15 according to an embodiment. FIG. 19B is a view illustrating a cross-sectional view taken along reference line D-D' illustrated in FIG. 15 according to an embodiment. FIG. 19C is a view illustrating a cross-sectional view taken along reference line D-D' illustrated in FIG. 15 according to an embodiment. FIG. 19D is a view illustrating a cross-sectional view taken along reference line D-D' illustrated in FIG. 15 according to an embodiment. FIG. 19E is a view illustrating a cross-sectional view taken along reference line D-D' illustrated in FIG. 15 according to an embodiment. FIG. 19F is a view illustrating a cross-sectional view taken along reference line D-D' illustrated in FIG. 15 according to an embodiment. The components described with reference to FIGS. 19A to 19F may be identical in whole or part to the components described with reference to FIGS. 1 to 18. The components described with reference to FIGS. 19A to 19F may be identical in whole or part to the components described with reference to FIGS. 20 to 21C.

According to an embodiment, the cover 500 may include a first cover area 501 and a second cover area 502. The first cover area 501 may correspond to the first display area (e.g., the first display area 2305a of FIG. 16). The second cover area 502 may correspond to the second display area (e.g., the second display area 2305b of FIG. 16). Each of the first cover area 501 and the second cover area 502 may be a portion of the cover 500. The first cover area 501 and the second cover area 502 may be distinguished by a boundary surface L. The second glass layer 520 may include a second glass layer end 520a. The filling layer 560 may contact the second glass layer end 520a. The adhesive layer 530 may include an adhesive layer end 530a. The filling layer 560 may contact the adhesive layer end 530a. The boundary surface L may pass through the second glass layer end 520a and the adhesive layer end 530a. The boundary surface L may include a boundary surface of the second glass layer 520 and the filling layer 560. The boundary surface L may include a boundary surface of the adhesive layer 530 and the filling layer 560. The first cover area 501 and the second cover area 502 may be distinguished based on the boundary surface L. The first cover area 501 and the second cover area 502 may be disposed at positions opposite to each other with respect to the boundary surface L. For example, an area where the second glass layer 520 is located with respect to the boundary surface L may be defined as the first cover area 501, and an area where the filling layer 560 is located with respect to the boundary surface L may be defined as the second cover area 502.

According to an embodiment, the inner glass layer 510 may include a first inner glass portion 511 disposed within the first cover area 501 and a second inner glass portion 512 disposed within the second cover area 502. The outer glass layer 520 may be disposed within the first cover area 501. The outer glass layer 520 may be spaced apart from the first inner glass portion 511. The thickness of the outer glass layer 520 may be greater than the thickness of the inner glass layer 510. The adhesive layer 530 may be disposed between the outer glass layer 520 and the first inner glass portion 511. The filling layer 560 may be disposed between the adhesive film layer 540 and the second inner glass portion 512. The hardness of the filling layer 560 may be greater than the hardness of the adhesive film layer 540.

Referring to FIG. 19B, a cover 5001 may include an inner glass layer 5101 including a first inner glass portion 5111 and a second inner glass portion 5121. The first inner glass portion 5111 may be disposed within the first cover area 501. The second inner glass portion 5121 may be disposed within the second cover area 502. A thickness t10 of the first inner glass portion 5111 may be greater than a thickness t11 of the second inner glass portion 5121. The thickness of the inner glass portion 5111 may be smaller than the thickness of the outer glass layer 520. The thickness of a filling layer 5601 may increase from the first cover area 501 toward the second cover area 502.

Referring to FIG. 19C, a cover 5002 may include an inner glass layer 5102. The inner glass layer 5102 may include a first inner glass portion 5112 disposed within the first cover area 501 and a second inner glass portion 5122 disposed within the second cover area 502. The second inner glass portion 5122 may include a lattice pattern. For example, the second inner glass portion 5122 may include a plurality of glass holes 5122a. The plurality of glass holes 5122a of the inner glass layer 5102 according to an embodiment of the disclosure may be hollow. The thickness of the inner glass layer 5102 may be smaller than the thickness of the outer glass layer 520. At least a portion of the filling layer 560 may be disposed inside the plurality of glass holes 5122a of the inner glass layer 5102 according to an embodiment of the disclosure. For example, the filling layer 560 may include a glass filling portion 5602 located inside the plurality of glass holes 5122a.

Referring to FIG. 19D, a cover 5003 may include a first glass layer 5103. The cover 5003 may include a second glass layer 520. The first glass layer 5103 may include a first glass portion 5113 disposed within the first cover area 501 and a second glass portion 5123 disposed within the second cover area 502. The second glass layer 520 may be disposed within the first cover area 501. The second glass layer 520 may be spaced apart from the first glass portion 5113. The thickness of the second glass layer 520 may be smaller than the thickness of the first glass layer 510. The adhesive layer 530 may be disposed between the second glass layer 520 and the first glass portion 5113. The filling layer 560 may be disposed between the adhesive film layer 540 and the second glass portion 5123. The hardness of the filling layer 560 may be greater than the hardness of the adhesive film layer 540.

Referring to FIG. 19E, a cover 5004 may include a first glass layer 5104 including a first glass portion 5114 and a second glass portion 5124. The cover 5004 may include a second glass layer 520 spaced apart from the first glass layer 5104. The first glass portion 5114 may be disposed within the first cover area 501. The second glass portion 5124 may be disposed within the second cover area 502. A thickness t12 of the first glass portion 5114 may be greater than a thickness t13 of the second glass portion 5124. The thickness of the first glass portion 5114 may be smaller than the thickness of the second glass layer 520. The thickness of a filling layer 5604 may increase from the first cover area 501 toward the second cover area 502.

Referring to FIG. 19F, a cover 5005 may include a first glass layer 5105. The cover 5005 may include a second glass layer 520 spaced apart from the first glass layer 5015. The first glass layer 5105 may include a first glass portion 5115 disposed within the first cover area 501 and a second glass portion 5125 disposed within the second cover area 502. The second glass portion 5125 may include a lattice pattern. For example, the second glass portion 5125 may include a plurality of glass holes 5125a. The plurality of glass holes 5125a of the first glass layer 5105 according to an embodiment of the disclosure may be hollow. The thickness of the first glass layer 5105 may be smaller than the thickness of the second glass layer 520. At least a portion of the filling layer 560 may be disposed inside the plurality of glass holes 5125a of the first glass layer 5105 according to an embodiment of the disclosure. For example, the filling layer 560 may include a glass filling portion 5605 located inside the plurality of glass holes 5125a.

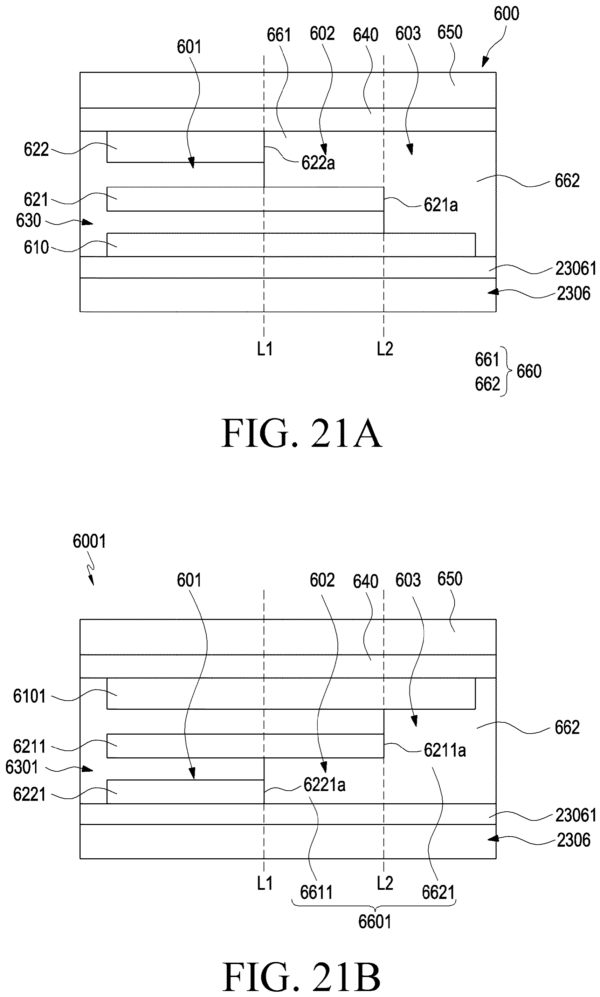

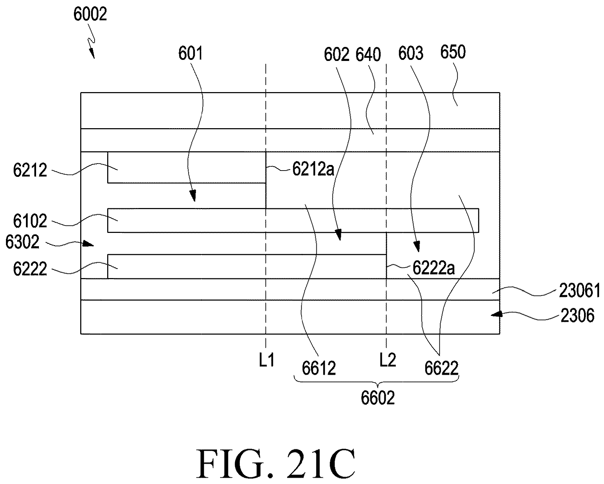

FIG. 20 is a portion of an internal structure of the electronic device 101 according to an embodiment of the disclosure. FIG. 21A is a view illustrating a cross-sectional view illustrating the cover 600 of FIG. 20 according to an embodiment. FIG. 21B is a view illustrating a cross-sectional view illustrating the cover 600 of FIG. 20 according to an embodiment. FIG. 21C is a view illustrating a cross-sectional view illustrating the cover 600 of FIG. 20 according to an embodiment. The components described with reference to FIGS. 20 to 21C may be identical in whole or part to the components described with reference to FIGS. 1 to 19F.

According to an embodiment, the electronic device 101 may include a housing 2106 and a display 2306 movably disposed with respect to the housing 2106. The electronic device 101 may include a roller 2026 around which at least a portion of the display 2306 is wound. The display 2306 may include a first display area 2306a, a second display area 2306b extending from the first display area 2306a toward the roller 2026, and a third display area 2306c wound around the roller 2026. A first curvature where the first display area 2306a is wound around the roller 2026 may be smaller than a second curvature where the second display area 2306b is wound around the roller 2026. The second curvature where the second display area 2306b is wound around the roller 2026 may be smaller than a third curvature where the third display area 2306c is wound around the roller 2026.

According to an embodiment, the electronic device 101 may include a cover 600. The cover 600 may move together with the display 2306. The electronic device 101 may include an adhesive member 23061. The adhesive member 23061 may be disposed between the display 2306 and the cover 600.

According to an embodiment, the cover 600 may include a first cover area 601, a second cover area 602, and a third cover area 603. The first cover area 601 may move together with the first display area 2306a. The second cover area 602 may move together with the second display area 2306b. The third cover area 603 may move together with the third display area 2306c. A first curvature where the first cover area 601 is wound around the roller 2026 may be smaller than a second curvature where the second cover area 602 is wound around the roller 2026. The second curvature where the second cover area 602 is wound around the roller 2026 may be smaller than a third curvature where the third cover area 603 is wound around the roller 2026.

According to an embodiment, each of the first cover area 601, the second cover area 602, and the third cover area 603 may be a portion of the covers 600, 6001, and 6002. Each of the first cover area 601, the second cover area 602, and the third cover area 603 may be distinguished by boundary surfaces L1 and L2.

Referring to FIG. 21A, the cover 600 may include a first glass layer 610, a second glass layer 621, a third glass layer 622, an adhesive layer 630, an adhesive film layer 640, a protective layer 650, and a filling layer 660. The first glass layer 610 may extend to correspond to all of the first, second, and third cover areas 601, 602, and 603. The second glass layer 621 may be spaced apart from the first glass layer 610. The second glass layer 621 may extend to correspond to the first and second cover areas 601 and 602. The third glass layer 622 may be spaced apart from the first and second glass layers 610 and 621. The third glass layer 622 may extend to correspond to the first cover area 601. The thickness of the third glass layer 622 may be substantially the same as the thickness of the first glass layer 610 or the second glass layer 621. The thickness of the third glass layer 622 may be greater than the thickness of the first glass layer 610. The thickness of the third glass layer 622 may be greater than the thickness of the second glass layer 621. The adhesive layer 630 may be disposed between the first glass layer 610 and the second glass layer 621. The adhesive layer 630 may be disposed between the second glass layer 621 and the third glass layer 622. The filling layer 660 may include a first filling portion 661 disposed between the adhesive film layer 640 and the second glass layer 621. The filling layer 660 may include a second filling portion 662 disposed between the adhesive film layer 640 and the first glass layer 610. The hardness of the filling layer 660 may be greater than the hardness of the adhesive film layer 640. The cover 600 illustrated in FIG. 21A may enhance impact resistance of the first cover area 601 by disposing all of the first, second, and third glass layers 610, 621, and 622 in the first cover area 601 where a curvature of winding around the roller 2026 is smallest. The cover 600 illustrated in FIG. 21A may enhance impact resistance while enhancing flexibility of the second cover area 602 by disposing the first and second glass layers 610 and 621 in the second cover area 602 where a curvature is smaller than that of the third cover area 603. The cover 600 illustrated in FIG. 21A may enhance flexibility of the third cover area 603 by disposing only the first glass layer 610 in the third cover area 603 where a curvature of winding around the roller 2026 is largest and disposing the second filling portion 662 that is thicker than the first filling portion 661. The second glass layer 621a may include a second glass layer end 621a. The filling layer 660 may contact the second glass layer end 621a. The third glass layer 622 may include a third glass layer end 622a. The filling layer 660 may contact the third glass layer end 622a. A first boundary surface L1 may include a boundary surface of the third glass layer end 622a and the filling layer 660. A second boundary surface L2 may include a boundary surface of the second glass layer end 621a and the filling layer 660. The first cover area 601 and the second cover area 602 may be distinguished from each other based on the first boundary surface L1. The first cover area 601 and the second cover area 602 may be disposed at positions opposite to each other with respect to the first boundary surface L1. The second cover area 602 and the third cover area 603 may be distinguished from each other based on the second boundary surface L2. The second cover area 602 and the third cover area 603 may be disposed at positions opposite to each other with respect to the second boundary surface L2.

Referring to FIG. 21B, a cover 6001 may include a first glass layer 6101, a second glass layer 6211, a third glass layer 6221, an adhesive layer 6301, an adhesive film layer 640, a protective layer 650, and a filling layer 6601. The first glass layer 6101 may extend to correspond to all of the first, second, and third cover areas 601, 602, and 603. The second glass layer 6211 may be spaced apart from the first glass layer 6101. The second glass layer 6211 may extend to correspond to the first and second cover areas 601 and 602. The third glass layer 6221 may be spaced apart from the first and second glass layers 6101 and 6211. The third glass layer 6221 may extend to correspond to the first cover area 601. The thickness of the third glass layer 6221 may be substantially the same as the thickness of the first glass layer 6101 or the second glass layer 6211. The thickness of the third glass layer 6221 may be greater than the thickness of the first glass layer 6101. The thickness of the third glass layer 6221 may be greater than the thickness of the second glass layer 6211. The adhesive layer 6301 may be disposed between the first glass layer 6101 and the second glass layer 6211. The adhesive layer 6301 may be disposed between the second glass layer 6211 and the third glass layer 6221. The filling layer 6601 may include a first filling portion 6611 disposed between the adhesive member 23061 and the second glass layer 6211. The filling layer 6601 may include a second filling portion 6621 disposed between the adhesive member 23061 and the first glass layer 6101. The hardness of the filling layer 6601 may be greater than the hardness of the adhesive film layer 640. The cover 6001 illustrated in FIG. 21B may enhance impact resistance of the first cover area 601 by disposing all of the first, second, and third glass layers 6101, 6211, and 6221 in the first cover area 601 where a curvature of winding around the roller 2026 is smallest. The cover 6001 illustrated in FIG. 21B may enhance impact resistance while enhancing flexibility of the second cover area 602 by disposing the first and second glass layers 6101 and 6211 in the second cover area 602 where a curvature is smaller than that of the third cover area 603. The cover 6001 illustrated in FIG. 21B may enhance flexibility of the third cover area 603 by disposing only the first glass layer 6101 in the third cover area 603 where a curvature of winding around the roller 2026 is largest and disposing the second filling portion 6621 that is thicker than the first filling portion 6611. The second glass layer 6211a may include a second glass layer end 6211a. The filling layer 6601 may contact the second glass layer end 6211a. The third glass layer 6221 may include a third glass layer end 6221a. The filling layer 6601 may contact the third glass layer end 6221a. A first boundary surface L1 may include a boundary surface of the third glass layer end 6221a and the filling layer 6601. A second boundary surface L2 may include a boundary surface of the second glass layer end 6211a and the filling layer 6601. The first cover area 601 and the second cover area 602 may be distinguished from each other based on the first boundary surface L1. The first cover area 601 and the second cover area 602 may be disposed at positions opposite to each other with respect to the first boundary surface L1. The second cover area 602 and the third cover area 603 may be distinguished from each other based on the second boundary surface L2. The second cover area 602 and the third cover area 603 may be disposed at positions opposite to each other with respect to the second boundary surface L2.

Referring to FIG. 21C, a cover 6002 may include a first glass layer 6102, a second glass layer 6212, a third glass layer 6222, an adhesive layer 6302, an adhesive film layer 640, a protective layer 650, and a filling layer 6602. The first glass layer 6102 may extend to correspond to all of the first, second, and third cover areas 601, 602, and 603. The second glass layer 6212 may be spaced apart from the first glass layer 6102. The second glass layer 6212 may extend to correspond to the first cover area 601. The thickness of the second glass layer 6212 may be substantially the same as the thickness of the first glass layer 6102 or the third glass layer 6222. The thickness of the second glass layer 6212 may be greater than the thickness of the first glass layer 6102. The thickness of the second glass layer 6212 may be greater than the thickness of the third glass layer 6222. The third glass layer 6222 may be spaced apart from the first and second glass layers 6102 and 6212. The third glass layer 6222 may extend to correspond to the first and second cover areas 601 and 602. The adhesive layer 6302 may be disposed between the first glass layer 6102 and the second glass layer 6212. The adhesive layer 6302 may be disposed between the second glass layer 6212 and the third glass layer 6222. The filling layer 6602 may include a first filling portion 6612 disposed between the adhesive film layer 640 and the first glass layer 6102. The filling layer 6602 may include a second filling portion 6622 disposed between the adhesive film layer 640 and the first glass layer 6102. The second filling portion 6622 may be disposed between the first glass layer 6102 and the adhesive member 23061. The hardness of the filling layer 6602 may be greater than the hardness of the adhesive film layer 640. The cover 6002 illustrated in FIG. 21C may enhance impact resistance of the first cover area 601 by disposing all of the first, second, and third glass layers 6102, 6212, and 6222 in the first cover area 601 where a curvature of winding around the roller 2026 is smallest. The cover 6002 illustrated in FIG. 21C may enhance impact resistance while enhancing flexibility of the second cover area 602 by disposing the first and third glass layers 6102 and 6222 in the second cover area 602 where a curvature is smaller than that of the third cover area 603. The cover 6002 illustrated in FIG. 21C may enhance flexibility of the third cover area 603 by disposing only the first glass layer 6102 in the third cover area 603 where a curvature of winding around the roller 2026 is largest and disposing the second filling portion 6622 that is thicker than the first filling portion 6612. The second glass layer 6212a may include a second glass layer end 6212a. The filling layer 6602 may contact the second glass layer end 6212a. The third glass layer 6222 may include a third glass layer end 6222a. The filling layer 6602 may contact the third glass layer end 6222a. A first boundary surface L1 may include a boundary surface of the second glass layer end 6212a and the filling layer 6602. A second boundary surface L2 may include a boundary surface of the third glass layer end 6222a and the filling layer 6602. The first cover area 601 and the second cover area 602 may be distinguished from each other based on the first boundary surface L1. The first cover area 601 and the second cover area 602 may be disposed at positions opposite to each other with respect to the first boundary surface L1. The second cover area 602 and the third cover area 603 may be distinguished from each other based on the second boundary surface L2. The second cover area 602 and the third cover area 603 may be disposed at positions opposite to each other with respect to the second boundary surface L2.

An electronic device may include a housing and a display seated on the housing. At least a portion of the display may be deformable. The electronic device may include a window coupled to the display. A portion of the window may be deformed by deformation of the display. The window may be damaged in a portion where deformation occurs.

A problem to be solved by the disclosure may be to enhance hardness of a deformable window.

A problem to be solved by the disclosure may be to divide a window into a plurality of areas having different hardness and viscosity values.

Problems to be solved by the disclosure are not limited to those mentioned above, and may be variously extended without departing from the spirit and scope of the disclosure.

An electronic device according to various embodiments of the disclosure may enhance hardness of a window by disposing an adhesive layer having a higher hardness than the filling layer.

An electronic device according to various embodiments of the disclosure may facilitate deformation of the window by disposing a filling layer having a low hardness in a portion where deformation occurs.

Effects obtainable by the disclosure are not limited to those mentioned above, and other effects not mentioned are clearly understood by those of ordinary skill in the art from the following description.

An electronic device (e.g., 101 of FIGS. 1 to 21C) according to an embodiment of the disclosure may include a housing (e.g., 201 of FIGS. 1 to 21C).

An electronic device (e.g., 101 of FIGS. 1 to 21C) according to an embodiment of the disclosure may include a flexible display (e.g., 230 of FIGS. 1 to 21C) disposed on the housing (e.g., 201 of FIGS. 1 to 21C) such that at least a portion thereof is deformable.

An electronic device (e.g., 101 of FIGS. 1 to 21C) according to an embodiment of the disclosure may include a cover (e.g., 300 of FIGS. 1 to 21C) coupled to the flexible display (e.g., 230 of FIGS. 1 to 21C) and configured such that at least a portion thereof is deformable.

The cover (e.g., 300 of FIGS. 1 to 21C) according to an embodiment of the disclosure may include an inner glass layer (e.g., 310 of FIGS. 1 to 21C) extending in a first direction along a surface of the flexible display (e.g., 230 of FIGS. 1 to 21C).

The cover (e.g., 300 of FIGS. 1 to 21C) according to an embodiment of the disclosure may include a first outer glass layer (e.g., 321 of FIGS. 1 to 21C) spaced apart from the inner glass layer (e.g., 310 of FIGS. 1 to 21C) in a second direction intersecting the first direction.

The cover (e.g., 300 of FIGS. 1 to 21C) according to an embodiment of the disclosure may include a second outer glass layer (e.g., 322 of FIGS. 1 to 21C) spaced apart from the inner glass layer (e.g., 310 of FIGS. 1 to 21C) in the second direction and spaced apart from the first outer glass layer (e.g., 321 of FIGS. 1 to 21C) in the first direction.

The cover (e.g., 300 of FIGS. 1 to 21C) according to an embodiment of the disclosure may include a first adhesive layer (e.g., 331 of FIGS. 1 to 21C) disposed between the first outer glass layer (e.g., 321 of FIGS. 1 to 21C) and the inner glass layer (e.g., 310 of FIGS. 1 to 21C).

The cover (e.g., 300 of FIGS. 1 to 21C) according to an embodiment of the disclosure may include a second adhesive layer (e.g., 332 of FIGS. 1 to 21C) disposed between the second outer glass layer (e.g., 322 of FIGS. 1 to 21C) and the inner glass layer (e.g., 310 of FIGS. 1 to 21C).

The cover (e.g., 300 of FIGS. 1 to 21C) according to an embodiment of the disclosure may include a filling layer (e.g., 360 of FIGS. 1 to 21C) at least a portion of which is disposed between the first adhesive layer (e.g., 331 of FIGS. 1 to 21C) and the second adhesive layer (e.g., 332 of FIGS. 1 to 21C).

The hardness of the first adhesive layer (e.g., 331 of FIGS. 1 to 21C) according to an embodiment of the disclosure may be greater than the hardness of the filling layer (e.g., 360 of FIGS. 1 to 21C).

The filling layer (e.g., 360 of FIGS. 1 to 21C) according to an embodiment of the disclosure may include a first filling portion (e.g., 361 of FIGS. 1 to 21C) disposed between the first adhesive layer (e.g., 331 of FIGS. 1 to 21C) and the second adhesive layer (e.g., 332 of FIGS. 1 to 21C).

The filling layer (e.g., 360 of FIGS. 1 to 21C) according to an embodiment of the disclosure may include a second filling portion (e.g., 362 of FIGS. 1 to 21C) disposed between the first outer glass layer (e.g., 321 of FIGS. 1 to 21C) and the second outer glass layer (e.g., 322 of FIGS. 1 to 21C).

The cover (e.g., 300 of FIGS. 1 to 21C) according to an embodiment of the disclosure may include an adhesive film layer (e.g., 340 of FIGS. 1 to 21C) seated on the first outer glass layer (e.g., 321 of FIGS. 1 to 21C) and the second outer glass layer (e.g., 322 of FIGS. 1 to 21C) and spaced apart from the inner glass layer (e.g., 310 of FIGS. 1 to 21C).

The filling layer (e.g., 360 of FIGS. 1 to 21C) according to an embodiment of the disclosure may be disposed between the inner glass layer (e.g., 310 of FIGS. 1 to 21C) and the adhesive film layer (e.g., 340 of FIGS. 1 to 21C).

The hardness of the adhesive film layer (e.g., 340 of FIGS. 1 to 21C) according to an embodiment of the disclosure may be smaller than the hardness of the first adhesive layer (e.g., 331 of FIGS. 1 to 21C) and greater than the hardness of the filling layer (e.g., 360 of FIGS. 1 to 21C).

The flexible display (e.g., 230 of FIGS. 1 to 21C) according to an embodiment of the disclosure may include a first display area (e.g., 231 of FIGS. 1 to 21C).

The flexible display (e.g., 230 of FIGS. 1 to 21C) according to an embodiment of the disclosure may include a second display area (e.g., 232 of FIGS. 1 to 21C) spaced apart from the first display area (e.g., 231 of FIGS. 1 to 21C).

The flexible display (e.g., 230 of FIGS. 1 to 21C) according to an embodiment of the disclosure may include a folding area (e.g., 233 of FIGS. 1 to 21C) connecting the first display area (e.g., 231 of FIGS. 1 to 21C) and the second display area (e.g., 232 of FIGS. 1 to 21C).

The filling layer (e.g., 360 of FIGS. 1 to 21C) according to an embodiment of the disclosure may be disposed at a position corresponding to the folding area (e.g., 233 of FIGS. 1 to 21C).

The cover (e.g., 300 of FIGS. 1 to 21C) according to an embodiment of the disclosure may include a first cover area (e.g., 301 of FIGS. 1 to 21C) including the first outer glass layer (e.g., 321 of FIGS. 1 to 21C) and the first adhesive layer (e.g., 331 of FIGS. 1 to 21C).

The cover (e.g., 300 of FIGS. 1 to 21C) according to an embodiment of the disclosure may include a second cover area (e.g., 302 of FIGS. 1 to 21C) including the second outer glass layer (e.g., 322 of FIGS. 1 to 21C) and the second adhesive layer (e.g., 332 of FIGS. 1 to 21C).

The cover (e.g., 300 of FIGS. 1 to 21C) according to an embodiment of the disclosure may include a cover folding area (e.g., 303 of FIGS. 1 to 21C) connecting the first cover area (e.g., 301 of FIGS. 1 to 21C) and the second cover area (e.g., 302 of FIGS. 1 to 21C) and including the filling layer (e.g., 360 of FIGS. 1 to 21C).

The first adhesive layer (e.g., 331 of FIGS. 1 to 21C) according to an embodiment of the disclosure may surround an end of the first outer glass layer (e.g., 321 of FIGS. 1 to 21C) and an end of the inner glass layer (e.g., 310 of FIGS. 1 to 21C).

The cover (e.g., 300 of FIGS. 1 to 21C) according to an embodiment of the disclosure may include a first surface (e.g., 300a of FIGS. 1 to 21C) spaced apart from each of the first outer glass layer (e.g., 321 of FIGS. 1 to 21C) and the inner glass layer (e.g., 310 of FIGS. 1 to 21C).

A gap between the first outer glass layer (e.g., 321 of FIGS. 1 to 21C) and the first surface (e.g., 300a of FIGS. 1 to 21C) according to an embodiment of the disclosure may be smaller than a gap between the inner glass layer (e.g., 310 of FIGS. 1 to 21C) and the first surface (e.g., 300a of FIGS. 1 to 21C).

An electronic device (e.g., 101 of FIGS. 1 to 21C) according to an embodiment of the disclosure may include a supporting member (e.g., 205 of FIGS. 1 to 21C) surrounding the cover (e.g., 300 of FIGS. 1 to 21C).

A gap between the first outer glass layer (e.g., 321 of FIGS. 1 to 21C) and the supporting member (e.g., 205 of FIGS. 1 to 21C) according to an embodiment of the disclosure may be smaller than a gap between the inner glass layer (e.g., 310 of FIGS. 1 to 21C) and the supporting member (e.g., 205 of FIGS. 1 to 21C).

A gap between the first outer glass layer (e.g., 321 of FIGS. 1 to 21C) and the housing (e.g., 201 of FIGS. 1 to 21C) according to an embodiment of the disclosure may be smaller than a gap between the inner glass layer (e.g., 310 of FIGS. 1 to 21C) and the housing (e.g., 201 of FIGS. 1 to 21C).

The first outer glass layer (e.g., 321 of FIGS. 1 to 21C) according to an embodiment of the disclosure may include a first outer glass edge (e.g., 3212 of FIGS. 1 to 21C) formed to be curved toward the filling layer (e.g., 360 of FIGS. 1 to 21C).

The cover (e.g., 300 of FIGS. 1 to 21C) according to an embodiment of the disclosure may include a protective layer (e.g., 350 of FIGS. 1 to 21C) covering the filling layer (e.g., 360 of FIGS. 1 to 21C).

The inner glass layer (e.g., 310 of FIGS. 1 to 21C) according to an embodiment of the disclosure may have a variable thickness in the first direction.

The inner glass layer (e.g., 310 of FIGS. 1 to 21C) according to an embodiment of the disclosure may include a lattice pattern.

The filling layer (e.g., 360 of FIGS. 1 to 21C) according to an embodiment of the disclosure may include a filling protrusion (e.g., 3609b of FIGS. 1 to 21C) inserted into the inner glass layer (e.g., 310 of FIGS. 1 to 21C).

The cover (e.g., 300 of FIGS. 1 to 21C) according to an embodiment of the disclosure may include an inner glass layer (e.g., 310 of FIGS. 1 to 21C) extending in a first direction along a surface of the flexible display (e.g., 230 of FIGS. 1 to 21C).

The cover (e.g., 300 of FIGS. 1 to 21C) according to an embodiment of the disclosure may include a first outer glass layer (e.g., 321 of FIGS. 1 to 21C) spaced apart from the inner glass layer (e.g., 310 of FIGS. 1 to 21C) in a second direction intersecting the first direction.

The cover (e.g., 300 of FIGS. 1 to 21C) according to an embodiment of the disclosure may include a second outer glass layer (e.g., 322 of FIGS. 1 to 21C) spaced apart from the inner glass layer (e.g., 310 of FIGS. 1 to 21C) in the second direction and spaced apart from the first outer glass layer (e.g., 321 of FIGS. 1 to 21C) in the first direction.

The cover (e.g., 300 of FIGS. 1 to 21C) according to an embodiment of the disclosure may include a first adhesive layer (e.g., 331 of FIGS. 1 to 21C) disposed between the first outer glass layer (e.g., 321 of FIGS. 1 to 21C) and the inner glass layer (e.g., 310 of FIGS. 1 to 21C).

The cover (e.g., 300 of FIGS. 1 to 21C) according to an embodiment of the disclosure may include a second adhesive layer (e.g., 332 of FIGS. 1 to 21C) disposed between the second outer glass layer (e.g., 322 of FIGS. 1 to 21C) and the inner glass layer (e.g., 310 of FIGS. 1 to 21C).

The cover (e.g., 300 of FIGS. 1 to 21C) according to an embodiment of the disclosure may include a filling layer (e.g., 360 of FIGS. 1 to 21C) at least a portion of which is disposed between the first adhesive layer (e.g., 331 of FIGS. 1 to 21C) and the second adhesive layer (e.g., 332 of FIGS. 1 to 21C).

The cover (e.g., 300 of FIGS. 1 to 21C) according to an embodiment of the disclosure may include an adhesive film layer (e.g., 340 of FIGS. 1 to 21C) extending in the first direction at a position spaced apart from the inner glass layer (e.g., 310 of FIGS. 1 to 21C) and laminated on the first outer glass layer (e.g., 321 of FIGS. 1 to 21C), the second outer glass layer (e.g., 322 of FIGS. 1 to 21C), and the filling layer (e.g., 360 of FIGS. 1 to 21C).

An electronic device (e.g., 101 of FIGS. 1 to 21C) according to an embodiment of the disclosure may include a cover (e.g., 300 of FIGS. 1 to 21C) coupled to a flexible display (e.g., 230 of FIGS. 1 to 21C) and including a flexible portion (e.g., 303 of FIGS. 1 to 21C) configured to be deformable.

The cover (e.g., 300 of FIGS. 1 to 21C) according to an embodiment of the disclosure may include a first glass layer (e.g., 310 of FIGS. 1 to 21C).

The cover (e.g., 300 of FIGS. 1 to 21C) according to an embodiment of the disclosure may include a second glass layer (e.g., 320 of FIGS. 1 to 21C) spaced apart from the first glass layer (e.g., 310 of FIGS. 1 to 21C) and including a first portion (e.g., 321 of FIGS. 1 to 21C) and a second portion (e.g., 322 of FIGS. 1 to 21C), wherein at least a portion of the flexible portion (e.g., 303 of FIGS. 1 to 21C) is positioned between the first portion (e.g., 321 of FIGS. 1 to 21C) and the second portion (e.g., 322 of FIGS. 1 to 21C).

The cover (e.g., 300 of FIGS. 1 to 21C) according to an embodiment of the disclosure may include an adhesive layer (e.g., 330 of FIGS. 1 to 21C) disposed between the first glass layer (e.g., 310 of FIGS. 1 to 21C) and the second glass layer (e.g., 320 of FIGS. 1 to 21C) and having a first hardness.

The cover (e.g., 300 of FIGS. 1 to 21C) according to an embodiment of the disclosure may include a filling layer (e.g., 360 of FIGS. 1 to 21C) disposed between the first portion (e.g., 321 of FIGS. 1 to 21C) and the second portion (e.g., 322 of FIGS. 1 to 21C) and having a second hardness which is smaller than the first hardness.

The adhesive layer (e.g., 330 of FIGS. 1 to 21C) according to an embodiment of the disclosure may include a first adhesive layer (e.g., 331 of FIGS. 1 to 21C) disposed between the first portion (e.g., 321 of FIGS. 1 to 21C) and the first glass layer (e.g., 310 of FIGS. 1 to 21C).

The adhesive layer (e.g., 330 of FIGS. 1 to 21C) according to an embodiment of the disclosure may include a second adhesive layer (e.g., 332 of FIGS. 1 to 21C) disposed between the second portion (e.g., 322 of FIGS. 1 to 21C) and the first glass layer (e.g., 310 of FIGS. 1 to 21C).

The filling layer (e.g., 360 of FIGS. 1 to 21C) according to an embodiment of the disclosure may include a second filling portion (e.g., 362 of FIGS. 1 to 21C) disposed between the first portion (e.g., 321 of FIGS. 1 to 21C) and the second portion (e.g., 322 of FIGS. 1 to 21C).

The cover (e.g., 300 of FIGS. 1 to 21C) according to an embodiment of the disclosure may include an adhesive film layer (e.g., 340 of FIGS. 1 to 21C) disposed over the first portion (e.g., 321 of FIGS. 1 to 21C) and the second portion (e.g., 322 of FIGS. 1 to 21C) and spaced apart from the first glass layer (e.g., 310 of FIGS. 1 to 21C).

The filling layer (e.g., 360 of FIGS. 1 to 21C) according to an embodiment of the disclosure may be disposed between the first glass layer (e.g., 310 of FIGS. 1 to 21C) and the adhesive film layer (e.g., 340 of FIGS. 1 to 21C).

A hardness of the adhesive film layer (e.g., 340 of FIGS. 1 to 21C) according to an embodiment of the disclosure may be smaller than a hardness of the adhesive layer (e.g., 330 of FIGS. 1 to 21C) and greater than a hardness of the filling layer (e.g., 360 of FIGS. 1 to 21C).

The cover (e.g., 300 of FIGS. 1 to 21C) according to an embodiment of the disclosure may include a first cover area (e.g., 301 of FIGS. 1 to 21C) including the first portion (e.g., 321 of FIGS. 1 to 21C).

The cover (e.g., 300 of FIGS. 1 to 21C) according to an embodiment of the disclosure may include a second cover area (e.g., 302 of FIGS. 1 to 21C) including the second portion (e.g., 322 of FIGS. 1 to 21C).

The cover (e.g., 300 of FIGS. 1 to 21C) according to an embodiment of the disclosure may include the flexible portion (e.g., 303 of FIGS. 1 to 21C) connecting the first cover area (e.g., 301 of FIGS. 1 to 21C) and the second cover area (e.g., 302 of FIGS. 1 to 21C) and including the filling layer (e.g., 360 of FIGS. 1 to 21C).

The adhesive layer (e.g., 330 of FIGS. 1 to 21C) according to an embodiment of the disclosure may surround an end of the first glass layer (e.g., 310 of FIGS. 1 to 21C) and an end of the second glass layer (e.g., 320 of FIGS. 1 to 21C).

The cover (e.g., 300 of FIGS. 1 to 21C) according to an embodiment of the disclosure may include a first surface (e.g., 300a of FIGS. 1 to 21C) spaced apart from each of the first glass layer (e.g., 310 of FIGS. 1 to 21C) and the second glass layer (e.g., 320 of FIGS. 1 to 21C).

A gap between the second glass layer (e.g., 320 of FIGS. 1 to 21C) and the first surface (e.g., 300a of FIGS. 1 to 21C) according to an embodiment of the disclosure may be smaller than a gap between the first glass layer (e.g., 310 of FIGS. 1 to 21C) and the first surface (e.g., 300a of FIGS. 1 to 21C).

An electronic device (e.g., 101 of FIGS. 1 to 21C) according to an embodiment of the disclosure may include a supporting member (e.g., 205 of FIGS. 1 to 21C) surrounding the cover (e.g., 300 of FIGS. 1 to 21C).

A gap between the second glass layer (e.g., 320 of FIGS. 1 to 21C) and the supporting member (e.g., 205 of FIGS. 1 to 21C) according to an embodiment of the disclosure may be smaller than a gap between the first glass layer (e.g., 310 of FIGS. 1 to 21C) and the supporting member (e.g., 205 of FIGS. 1 to 21C).

A gap between the second glass layer (e.g., 320 of FIGS. 1 to 21C) and the housing (e.g., 201 of FIGS. 1 to 21C) according to an embodiment of the disclosure may be smaller than a gap between the first glass layer (e.g., 310 of FIGS. 1 to 21C) and the housing (e.g., 201 of FIGS. 1 to 21C).

The second glass layer (e.g., 320 of FIGS. 1 to 21C) according to an embodiment of the disclosure may include an edge (e.g., 3212 of FIGS. 1 to 21C) formed to be curved toward the filling layer (e.g., 360 of FIGS. 1 to 21C).

A first thickness of a first area, corresponding to the second glass layer (e.g., 320 of FIGS. 1 to 21C), of the first glass layer (e.g., 310 of FIGS. 1 to 21C) according to an embodiment of the disclosure may be different from a second thickness of a second area, corresponding to the flexible portion (e.g., 303 of FIGS. 1 to 21C), of the first glass layer (e.g., 310 of FIGS. 1 to 21C).

The first glass layer (e.g., 310 of FIGS. 1 to 21C) according to an embodiment of the disclosure may include a lattice pattern.

The filling layer (e.g., 360 of FIGS. 1 to 21C) according to an embodiment of the disclosure may include a filling protrusion (e.g., 3609b of FIGS. 1 to 21C) inserted into the first glass layer (e.g., 310 of FIGS. 1 to 21C).

The cover (e.g., 300 of FIGS. 1 to 21C) according to an embodiment of the disclosure may include an adhesive film layer (e.g., 340 of FIGS. 1 to 21C) spaced apart from the flexible display (e.g., 230 of FIGS. 1 to 21C).

The cover (e.g., 300 of FIGS. 1 to 21C) according to an embodiment of the disclosure may include a first glass layer (e.g., 310 of FIGS. 1 to 21C) disposed between the flexible display (e.g., 230 of FIGS. 1 to 21C) and the adhesive film layer (e.g., 340 of FIGS. 1 to 21C).

The cover (e.g., 300 of FIGS. 1 to 21C) according to an embodiment of the disclosure may include a second glass layer (e.g., 320 of FIGS. 1 to 21C) disposed between the flexible display (e.g., 230 of FIGS. 1 to 21C) and the adhesive film layer (e.g., 340 of FIGS. 1 to 21C) and spaced apart from the first glass layer (e.g., 310 of FIGS. 1 to 21C).

The cover (e.g., 300 of FIGS. 1 to 21C) according to an embodiment of the disclosure may include an adhesive layer (e.g., 330 of FIGS. 1 to 21C) disposed between the first glass layer (e.g., 310 of FIGS. 1 to 21C) and the second glass layer (e.g., 320 of FIGS. 1 to 21C).

The cover (e.g., 300 of FIGS. 1 to 21C) according to an embodiment of the disclosure may include a filling layer (e.g., 360 of FIGS. 1 to 21C) disposed at a position corresponding to the flexible portion (e.g., 303 of FIGS. 1 to 21C) and between the flexible display (e.g., 230 of FIGS. 1 to 21C) and the adhesive film layer (e.g., 340 of FIGS. 1 to 21C).

An electronic device (e.g., 101 of FIGS. 1 to 21C) according to an embodiment of the disclosure may include a cover coupled to a flexible display and including a flexible portion configured to be deformable and a cover portion connected to the flexible portion.

The cover (e.g., 300 of FIGS. 1 to 21C) according to an embodiment of the disclosure may include a first glass layer.

The cover (e.g., 300 of FIGS. 1 to 21C) according to an embodiment of the disclosure may include a second glass layer spaced apart from the first glass layer and disposed at a first position corresponding to the cover portion.

The cover (e.g., 300 of FIGS. 1 to 21C) according to an embodiment of the disclosure may include an adhesive layer disposed between the first glass layer and the second glass layer and having a first hardness.

The cover (e.g., 300 of FIGS. 1 to 21C) according to an embodiment of the disclosure may include a filling layer disposed at a second position corresponding to the flexible portion and having a second hardness smaller than the first hardness.

An electronic device (e.g., 101 of FIGS. 1 to 21C) according to an embodiment of the disclosure may include a deformable housing (e.g., 201 of FIGS. 1 to 21C).

An electronic device (e.g., 101 of FIGS. 1 to 21C) according to an embodiment of the disclosure may include a flexible display (e.g., 230 of FIGS. 1 to 21C) at least a portion of which is deformably received in the housing (e.g., 201 of FIGS. 1 to 21C).

An electronic device (e.g., 101 of FIGS. 1 to 21C) according to an embodiment of the disclosure may include a cover (e.g., 300 of FIGS. 1 to 21C) disposed over the flexible display (e.g., 230 of FIGS. 1 to 21C).

The cover (e.g., 300 of FIGS. 1 to 21C) according to an embodiment of the disclosure may include a first glass layer (e.g., 310 of FIGS. 1 to 21C).

The cover (e.g., 300 of FIGS. 1 to 21C) according to an embodiment of the disclosure may include a second glass layer (e.g., 320 of FIGS. 1 to 21C) having a second thickness greater than the first thickness and disposed over or under the first glass layer (e.g., 310 of FIGS. 1 to 21C) so as not to overlap a first area (e.g., 303 of FIGS. 1 to 21C) of the first glass layer (e.g., 310 of FIGS. 1 to 21C) but to overlap a second area (e.g., 301 and 302 of FIGS. 1 to 21C) of the first glass layer (e.g., 310 of FIGS. 1 to 21C).

The cover (e.g., 300 of FIGS. 1 to 21C) according to an embodiment of the disclosure may include a first adhesive layer (e.g., 330 of FIGS. 1 to 21C) disposed between the first glass layer (e.g., 310 of FIGS. 1 to 21C) and the second glass layer (e.g., 320 of FIGS. 1 to 21C) and having a first hardness.

The cover (e.g., 300 of FIGS. 1 to 21C) according to an embodiment of the disclosure may include a filling layer (e.g., 360 of FIGS. 1 to 21C) disposed over or under the first glass layer (e.g., 310 of FIGS. 1 to 21C) so as to overlap the first area (e.g., 303 of FIGS. 1 to 21C) of the first glass layer (e.g., 310 of FIGS. 1 to 21C) substantially adjacent to a side surface of the second glass layer (e.g., 320 of FIGS. 1 to 21C) and having a second hardness smaller than the first hardness.

The cover (e.g., 300 of FIGS. 1 to 21C) according to an embodiment of the disclosure may include a protective layer (e.g., 350 of FIGS. 1 to 21C) disposed over the first glass layer (e.g., 310 of FIGS. 1 to 21C), the second glass layer (e.g., 320 of FIGS. 1 to 21C), and the filling layer (e.g., 360 of FIGS. 1 to 21C).

The cover (e.g., 300 of FIGS. 1 to 21C) according to an embodiment of the disclosure may include an adhesive film layer (e.g., 340 of FIGS. 1 to 21C) attaching the protective layer (e.g., 350 of FIGS. 1 to 21C) to the first glass layer (e.g., 310 of FIGS. 1 to 21C) or the second glass layer (e.g., 320 of FIGS. 1 to 21C).

The deformable housing (e.g., 201 of FIGS. 1 to 21C) according to an embodiment of the disclosure may include a first housing (e.g., 210 of FIGS. 1 to 21C).

The deformable housing (e.g., 201 of FIGS. 1 to 21C) according to an embodiment of the disclosure may include a second housing (e.g., 220 of FIGS. 1 to 21C) rotatably disposed with respect to the first housing (e.g., 210 of FIGS. 1 to 21C).

The electronic device (e.g., 101 of FIGS. 1 to 21C) according to an embodiment of the disclosure may include a hinge (e.g., 2021 of FIGS. 1 to 21C) rotatably connecting the first housing (e.g., 210 of FIGS. 1 to 21C) and the second housing (e.g., 220 of FIGS. 1 to 21C).

The deformable housing (e.g., 201 of FIGS. 1 to 21C) according to an embodiment of the disclosure may include a first housing and a second housing connected to slide-out and slide-in from one side of the first housing.

The electronic device (e.g., 101 of FIGS. 1 to 21C) according to an embodiment of the disclosure may include a supporting member (e.g., 2025 of FIGS. 1 to 21C) configured to support a portion of the flexible display.

The adhesive film layer according to an embodiment of the disclosure may have a third hardness lower than the first hardness and higher than the second hardness.

The adhesive layer according to an embodiment of the disclosure may have a first viscosity.

The filling layer according to an embodiment of the disclosure may have a second viscosity higher than the first viscosity.

Each of the adhesive layer and the filling layer according to an embodiment of the disclosure may have the same refractive index as the second glass layer.

The adhesive layer according to an embodiment of the disclosure may have a first modulus.

The filling layer according to an embodiment of the disclosure may have a second modulus lower than the first modulus.

The adhesive film layer according to an embodiment of the disclosure may have a third modulus lower than the first modulus and lower than the second modulus.

The adhesive layer according to an embodiment of the disclosure may have a first thickness.

The filling layer according to an embodiment of the disclosure may have a second thickness greater than the first thickness.

The adhesive film layer according to an embodiment of the disclosure may have a third thickness greater than the first thickness and smaller than the second thickness.

The adhesive layer according to an embodiment of the disclosure may be disposed not to substantially overlap the filling layer.

The filling layer according to an embodiment of the disclosure may be disposed to cover the side surface of the second glass layer and a side surface of the adhesive layer corresponding to the side surface.

The adhesive layer according to an embodiment of the disclosure may extend from between the first glass layer and the second glass layer to cover at least a portion of a first edge of the first glass layer.

The adhesive layer according to an embodiment of the disclosure may extend to cover at least a portion of a second edge of the second glass layer corresponding to the first edge.

The side surface of the second glass layer according to an embodiment of the disclosure may include a curved surface.

The side surface of the second glass layer according to an embodiment of the disclosure may include an inclined surface.

The side surface of the second glass layer according to an embodiment of the disclosure may include a chamfer region.

The chamfer region according to an embodiment of the disclosure may have an inclination of 11 degrees or more.

The first area of the first glass layer according to an embodiment of the disclosure may be thinner than the second area.

The first glass layer according to an embodiment of the disclosure may have one or more slits formed in the first area along a bending axis of the flexible display.

The filling layer according to an embodiment of the disclosure may substantially fill at least one slit of the one or more slits.

The second glass layer according to an embodiment of the disclosure may be disposed over the first glass layer and below the protective layer.

The protective layer according to an embodiment of the disclosure may be adhered to the second glass layer and the filling layer through the adhesive film layer.

The second glass layer according to an embodiment of the disclosure may be disposed below the first glass layer and over the flexible display.

The protective layer according to an embodiment of the disclosure may be adhered to the first glass layer through the adhesive film layer.

An outer surface of the second glass layer according to an embodiment of the disclosure may protrude beyond an outer surface of the first glass layer in a direction facing away from the filling layer.

The electronic device according to an embodiment of the disclosure may include a hinge.

The deformable housing according to an embodiment of the disclosure may include a first housing, a second housing, and a hinge housing disposed between the first housing and the second housing and receiving the hinge.

The second glass layer according to an embodiment of the disclosure may include a first glass portion and a second glass portion spaced apart from each other along a length direction of the hinge.

The filling layer according to an embodiment of the disclosure may be disposed between the first glass portion and the second glass portion so as to at least partially overlap the hinge when viewed from above.

The adhesive layer according to an embodiment of the disclosure may include a first adhesive portion corresponding to the first glass portion and a second adhesive portion corresponding to the second glass portion.

The filling layer according to an embodiment of the disclosure may substantially fill a space between the first glass portion and the second glass portion and a space between the first adhesive portion and the second adhesive portion.

The electronic device according to an embodiment of the disclosure may include a supporting member disposed on the housing along an edge of the flexible display.

An outer surface of the first glass layer according to an embodiment of the disclosure may be spaced apart from an inner surface of the supporting member by a first separation distance.

An outer surface of the second glass layer according to an embodiment of the disclosure may be spaced apart from the inner surface of the supporting member by a second separation distance shorter than the first separation distance.

The deformable housing according to an embodiment of the disclosure may include a first housing, a second housing connected to slide-out and slide-in from one side of the first housing, and a plurality of bars configured to support a portion of the flexible display and spaced apart along a length direction of the one side.

The filling layer according to an embodiment of the disclosure may be disposed to substantially overlap at least one bar of the plurality of bars when viewed from above.

While the disclosure has been shown and described with reference to exemplary embodiments thereof, it will be apparent to those of ordinary skill in the art that various changes in form and detail may be made thereto without departing from the spirit and scope of the disclosure as defined by the following claims.

The disclosure has been described by way of illustration with respect to an embodiment, but it should be understood that the embodiment is for illustration and not limiting the disclosure. It is apparent to those skilled in the art that various changes in form and detailed configuration may be made without departing from the overall scope of the disclosure, including the appended claims and their equivalents.

## Claims

1. An electronic device (101) comprising:
a housing (201);
a flexible display (230) disposed on the housing (201), wherein at least a portion of the flexible display (230) is deformable; and
a cover (300) coupled to the flexible display (230) and including a flexible portion (303) configured to be deformable,
wherein the cover (300) comprises:
a first glass layer (310);
a second glass layer (320) spaced apart from the first glass layer (310) and including a first portion (321) and a second portion (322), wherein at least a portion of the flexible portion (303) is positioned between the first portion (321) and the second portion (322);
an adhesive layer (330) disposed between the first glass layer (310) and the second glass layer (320) and having a first hardness; and
a filling layer (360) disposed between the first portion (321) and the second portion (322) and having a second hardness which is smaller than the first hardness.

2. The electronic device of claim 1,
wherein the adhesive layer (330) comprises:
a first adhesive layer (331) disposed between the first portion (321) and the first glass layer (310); and
a second adhesive layer (332) disposed between the second portion (322) and the first glass layer (310), and
wherein the filling layer (360) comprises:
a first filling portion (361) disposed between the first adhesive layer (331) and the second adhesive layer (332); and
a second filling portion (362) disposed between the first portion (321) and the second portion (322).

3. The electronic device of claim 1 or 2,
wherein the cover (300) further comprises an adhesive film layer (340) disposed over the first portion (321) and the second portion (322) and spaced apart from the first glass layer (310),
wherein the filling layer (360) is disposed between the first glass layer (310) and the adhesive film layer (340).

4. The electronic device of claim 3,
wherein a hardness of the adhesive film layer (340) is smaller than a hardness of the adhesive layer (330) and greater than a hardness of the filling layer (360).

5. The electronic device of any one of claims 1 to 4,
wherein the flexible display (230) comprises:
a first display area (231);
a second display area (232) spaced apart from the first display area (231); and
a folding area (233) connecting the first display area (231) and the second display area (232),
wherein the filling layer (360) is disposed at a position corresponding to the folding area (233).

6. The electronic device of any one of claims 1 to 5,
wherein the cover (300) includes:
a first cover area (301) including the first portion (321);
a second cover area (302) including the second portion (322); and
the flexible portion (303) connecting the first cover area (301) and the second cover area (302), and including the filling layer (360).

7. The electronic device of any one of claims 1 to 6,
wherein the adhesive layer (330) surrounds an end of the first glass layer (310) and an end of the second glass layer (320).

8. The electronic device of any one of claims 1 to 7,
wherein the cover (300) includes a first surface (300a) spaced apart from the first glass layer (310) and the second glass layer (320),
wherein a gap between the second glass layer (320) and the first surface (300a) is smaller than a gap between the first glass layer (310) and the first surface (300a).

9. The electronic device of any one of claims 1 to 8, further comprising:
a support member (205) surrounding the cover (300),
wherein a gap between the second glass layer (320) and the support member (205) is smaller than a gap between the first glass layer (310) and the support member (205).

10. The electronic device of any one of claims 1 to 9,
wherein a gap between the second glass layer (320) and the housing (201) is smaller than a gap between the first glass layer (310) and the housing (201).

11. The electronic device of any one of claims 1 to 10,
wherein the second glass layer (320) includes an edge (3212) formed to be curved toward the filling layer (360).

12. The electronic device of any one of claims 1 to 11,
wherein the cover (300) further comprises a protective layer (350) covering the filling layer (360).

13. The electronic device of any one of claims 1 to 12,
wherein a first thickness of a first area, corresponding to the second glass layer (320), of the first glass layer (310) is different from a second thickness of a second area, corresponding to the flexible portion (303), of the first glass layer (310).

14. The electronic device of any one of claims 1 to 13,
wherein the first glass layer (310) includes a lattice pattern.

15. The electronic device of any one of claims 1 to 14,
wherein the filling layer (360) includes a filling protrusion (3609b) inserted into the first glass layer (310).
